# EUROPÄISCHE PATENTANMELDUNG

(11) **EP 4 152 687 A1**
(43) Veröffentlichungstag der Anmeldung: **22.03.2023**
(21) Anmeldenummer: 22196358.0
(22) Anmeldetag: 19.09.2022
(51) Int. Cl.: H04L 9/32, G06F 21/35, G06F 21/36, G06Q 10/0836, G07F 17/12, G07C 9/00

(54) **VERFAHREN UND VORRICHTUNG ZUM FESTSTELLEN, OB EINE INFORMATION ZUM ZUGANG ZU EINEM FACH EINER FACHANLAGE BERECHTIGT**

(30) Priorität: 21.09.2021 DE 102021124350
(71) Anmelder: Deutsche Post AG, 53113 Bonn (DE)
(72) Erfinder: HELFERICH, Frank, 53547 Leubsdorf (DE); KIRCHHEINER, Thilo, 64846 Groß-Zimmern (DE); BAYE, Thomas, 53173 Bonn (DE)
(74) Vertreter: Cohausz & Florack

(57) **Zusammenfassung**

Offenbart wird u.a. ein Verfahren, beispielsweise ausgeführt von einer Fachanlage, das Verfahren umfassend: Erhalten eines Hashwerts und einer ersten Information von einer zweiten Vorrichtung, wobei der Hashwert mit einem Fach der Fachanlage assoziiert ist, und wobei die erste Information mit einer ersten Vorrichtung assoziiert ist, Erhalten oder Erfassen einer zweiten Information; Feststellen, basierend zumindest auf der ersten Information und dem Hashwert, ob die zweite Information zum Zugang zu einem oder mehreren Fächern der Fachanlage berechtigt. Drei zugehörige Verfahren, eines beispielsweise ausgeführt von einer ersten Vorrichtung, eines beispielsweise ausgeführt von einer zweiten Vorrichtung und eines beispielsweise ausgeführt von einer mobilen Vorrichtung sind ebenfalls offenbart. Darüber hinaus werden entsprechende Vorrichtungen, Systeme und Computerprogramme zur jeweiligen Ausführung und/oder Steuerung eines oder mehrerer der offenbarten Verfahren offenbart.

## Beschreibung

### Gebiet

Beispielhafte Ausführungsformen der Erfindung betreffen Verfahren, Vorrichtungen, Systeme und Computerprogramme zum Feststellen, ob eine Information zum Zugang zu einem oder mehreren Fächern einer Fachanlage berechtigt, wobei es sich bei der Fachanlage insbesondere um eine Fachanlage zum Abholen und/oder Einstellen von Sendungen von Zustell- oder Lieferdiensten handelt

### Hintergrund

Fachanlagen finden beispielsweise in Form von Schließfach- oder Paketfachanlagen mannigfaltig Anwendung. Ein Beispiel für eine Paketfachanlage ist die Packstation der Anmelderin, in die sich ein bei ihm registrierter Empfänger Sendungen liefern lassen kann. Die Sendung wird vom Zusteller in ein Fach einer in der Nähe des Empfängers befindlichen und/oder von dem Empfänger zuvor festgelegten Packstation eingelegt, das Fach verschlossen und der Empfänger entsprechend benachrichtigt. Damit der benachrichtigte Empfänger eine für ihn bereitgestellte Sendung aus einem Fach der Fachanlage entnehmen kann, muss die Fachanlage feststellen, dass der Empfänger berechtigt ist, zu einem oder mehreren Fächern der Fachanlage Zugang zu erhalten.

### Zusammenfassung einiger beispielhafter Ausführungsformen der Erfindung

In Bezug auf eine Fachanlage ist es grundsätzlich erstrebenswert, dass diese zuverlässig, effizient, robust und sicher feststellen kann, dass ein Benutzer berechtigt ist, zu einem oder mehreren Fächern der Fachanlage Zugang zu erhalten, um anschließend den Zugang zu den entsprechenden Fächern zu gewähren.

Zudem ist eine flexible Nutzung einer Fachanlage wünschenswert, sodass z.B. nicht nur die Anmelderin, die eine Vielzahl von Fachanlagen verwaltet, sondern auch ein Partnerunternehmen mit verschiedenen Vorrichtungen oder Systemen Zugangsdaten für Fächer einer Fachanlage erzeugen kann, um sie z.B. unterschiedlichen Lieferdiensten oder Online-Händlern zur Verfügung zu stellen. So können beispielsweise Fächer langfristig an das Partnerunternehmen vermietet werden, welches dann selbständig über die Verwendung der Fächer entscheidet. Die technische Verwaltung seiner Fächer, ob und welche Lieferungen darin eingelegt sind und wer die Berechtigten für die Öffnung der Fächer sind, kann somit vom Partnerunternehmen, d.h. deren technischen Systemen erfolgen. Die technischen Systeme der Anmelderin können dabei auf die Bereitstellung der Fächer und den Authentifizierungsprozess zur Öffnung eines Faches beschränkt sein. Dabei wird z.B. nicht unterschieden, ob die Fachöffnung zum Einlegen einer Lieferung durch Lieferdienste oder Endkunden oder zur Entnahme oder Überprüfung geschieht

Hinsichtlich der Sicherheit ist besonders relevant, dass ein unbefugter Zugang zu Fächern der Fachanlage verhindert wird. In dem Fall, dass doch ein unbefugter Zugang zu einem Fach der Fachanlage aufgetreten ist, ist es außerdem relevant festzustellen, an welcher Stelle im System, d.h. z.B. in wessen Verantwortungsbereich, ein Sicherheitsleck vorlag. Wurden beim unbefugten Zugang beispielsweise kompromittierte Zugangsdaten verwendet, ist es relevant festzustellen, in welchem System oder Teil eines Systems die Zugangsdaten ausgespäht werden konnten. Das gilt besonders, wenn verschiedene Vorrichtungen oder Systeme Zugangsdaten für Fächer einer Fachanlage erzeugen können.

Hinsichtlich der Effizienz und Robustheit ist es besonders relevant, dass für die Bereitstellung der Fächer und für die Autorisierung der Fachöffnung wenig Daten erfasst und/oder verarbeitet werden müssen. Daher ist es z.B. vorteilhaft, dass ein Öffnungs-Code für ein Fach nur wenige Stellen umfasst. Während im manchen Fällen die Bedienung der Packstation durch das Einscannen eines Barcodes eines Ausdrucks oder eines Mobilgerätedisplays erfolgen kann, kann so zudem (z.B. bei Defekt des Scanners oder schlecht lesbarem Ausdruck/Display) eine manuelle Eingabe des Öffnungs-Codes möglich sein. Die Fachanlage muss dann beim Erfassen des Öffnungs-Code nur wenige Stellen erfassen und verarbeiten (und es müssen ihr beispielsweise entsprechend wenige Stellen übermittelt bzw. in sie eingegeben werden). Andererseits ist es nachteilig, dass der Öffnungs-Code nur wenige Ziffern umfasst, da er dann leichter durch zufälliges Ausprobieren an der Fachanlage oder von einem Angreifer der technischen Infrastruktur (Hacker, Innentäter) ermittelt werden kann, beispielsweise durch eine Brute-Force-Attacke.

Hinsichtlich der Zuverlässigkeit ist es wünschenswert, dass die Fachanlage beispielsweise unabhängig davon funktioniert, ob permanent eine Datenverbindung, z.B. drahtloser oder drahtgebundener Natur, der Fachanlage zu einem System, beispielsweise umfassend einen oder mehrere Server, vorhanden ist und ob ein Benutzer zu dem Zeitpunkt, zu dem seine Berechtigung zum Zugang zu einem Fach oder mehreren Fächern nachweisen möchte, Informationen von dem System erhalten und/oder mit dem System austauschen kann.

Die vorliegende Erfindung hat sich die Aufgabe gestellt, einen oder mehrere der oben beschriebenen Nachteile zu überwinden und/oder einen oder mehrere der oben beschriebenen Vorteile zu erhalten und/oder eine oder mehrere der oben beschriebenen angestrebten Verbesserungen zu erreichen.

Gemäß einem ersten beispielhaften Aspekt der Erfindung wird ein Verfahren offenbart, welches beispielsweise von einer ersten Vorrichtung (z.B. einem Server eines Händlers, der seinem Kunden Zugang zu einem Fach einer Fachanlage ermöglichen möchte) ausgeführt wird, das Verfahren umfassend:
- Bestimmen eines Hashwerts, wobei der Hashwert zumindest auf einer ersten Information und einer zweiten Information basiert, wobei der Hashwert und die zweite Information mit einem Fach einer Fachanlage assoziiert sind, wobei die zweite Information zum Zugang zu dem Fach der Fachanlage berechtigt, und wobei die erste Information mit der ersten Vorrichtung assoziiert ist,
- Ausgeben der ersten Information an eine zweite Vorrichtung (z.B. einen Broker; der eine Vielzahl von Fachanlagen verwaltet und/oder dazu eingerichtet ist, mit ihnen zu kommunizieren), wobei die zweite Vorrichtung nicht die Fachanlage ist,
- Ausgeben des Hashwerts an die zweite Vorrichtung,
- Ausgeben der zweiten Information an eine dritte Vorrichtung (z.B. eine mobile Vorrichtung, z.B. ein Smartphone des Kunden), sodass die zweite Information unter Verwendung der dritten Vorrichtung oder durch die dritte Vorrichtung an die Fachanlage ausgebbar oder für die Fachanlage bereitstellbar ist, wobei die dritte Vorrichtung nicht die Fachanlage ist.

Gemäß einem zweiten beispielhaften Aspekt der Erfindung wird ein Verfahren offenbart, welches beispielsweise von einer zweiten Vorrichtung ausgeführt wird, das Verfahren umfassend:
- Erhalten einer ersten Information von einer ersten Vorrichtung, wobei die erste Information mit der ersten Vorrichtung assoziiert ist,
- Erhalten eines Hashwerts, wobei der Hashwert zumindest auf der ersten Information und einer zweiten Information basiert, wobei der Hashwert und die zweite Information mit einem Fach einer Fachanlage assoziiert sind, und wobei die zweite Information zum Zugang zu dem Fach der Fachanlage berechtigt,
- Ausgeben des Hashwerts und der ersten Information an die Fachanlage, sodass für die Fachanlage, basierend zumindest auf der ersten Information und dem Hashwert, feststellbar ist, ob eine zweite Information zum Zugang zu einem oder mehreren Fächern der Fachanlage berechtigt.

Gemäß einem dritten beispielhaften Aspekt der Erfindung wird ein Verfahren offenbart, welches beispielsweise von einer mobilen Vorrichtung ausgeführt wird, das Verfahren umfassend:
- Erhalten oder Erfassen einer zweiten Information von einer ersten Vorrichtung, wobei die zweite Information mit einem Fach einer Fachanlage assoziiert ist, wobei die zweite Information zum Zugang zu dem Fach der Fachanlage berechtigt, und wobei die erste Vorrichtung nicht die Fachanlage ist,
- Übermitteln der zweiten Information an die Fachanlage oder Bereitstellen der zweiten Information für die Fachanlage, sodass für die Fachanlage, basierend zumindest auf einer ersten Information und einem Hashwert, feststellbar ist, ob die zweite Information zum Zugang zu einem oder mehreren Fächern der Fachanlage berechtigt, wobei die erste Information mit der ersten Vorrichtung assoziiert ist.

Gemäß einem vierten beispielhaften Aspekt der Erfindung wird ein Verfahren offenbart, welches beispielsweise von einer Fachanlage ausgeführt wird, das Verfahren umfassend:
- Erhalten eines Hashwerts und einer ersten Information von einer zweiten Vorrichtung, wobei der Hashwert mit einem Fach der Fachanlage assoziiert ist, und wobei die erste Information mit einer ersten Vorrichtung assoziiert ist,
- Erhalten oder Erfassen einer zweiten Information,
- Feststellen, basierend zumindest auf der ersten Information und dem Hashwert, ob die zweite Information zum Zugang zu einem oder mehreren Fächern der Fachanlage berechtigt.

Gemäß jedem der vorgenannten Aspekte der Erfindung werden des Weiteren jeweils offenbart:
- Ein Computerprogramm, umfassend Programmanweisungen, die einen Prozessor zur Ausführung und/oder Steuerung des Verfahrens gemäß dem jeweiligen Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung oder ein System aus zwei, drei, vier oder mehr Vorrichtungen, eingerichtet zur Ausführung und/oder Steuerung des Verfahrens gemäß dem jeweiligen Aspekt der Erfindung oder umfassend jeweilige Mittel zur Ausführung und/oder Steuerung der Schritte des Verfahrens gemäß dem jeweiligen Aspekt der Erfindung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein. Eine Vorrichtung gemäß dem ersten Aspekt der Erfindung kann beispielsweise ein Server sein. Dabei kann unter einem Server beispielsweise auch ein Teil eines Servers wie eine logische oder funktionale Einheit verstanden werden. Unter einem Server ist daher insbesondere auch ein System aus mehreren Vorrichtungen zu verstehen, die gemeinsam eine Serverfunktion bereitstellen, beispielsweise eine Servercloud. Eine Vorrichtung gemäß dem ersten Aspekt der Erfindung kann aber beispielsweise auch eine mobile Vorrichtung sein, beispielsweise ein Smartphone oder ein Handscanner, z.B. eines Lieferanten oder Zustellers. Eine Vorrichtung gemäß dem zweiten Aspekt der Erfindung kann ebenfalls beispielsweise ein Server sein. Dabei kann es sich auch hier bei einem Server um eine logische oder funktionale Einheit handeln, sodass unter einem Server beispielsweise auch eine Servercloud oder ein Serversystem zu verstehen sein kann. Eine Vorrichtung gemäß dem dritten Aspekt der Erfindung kann beispielsweise eine mobile Vorrichtung sein, beispielsweise ein Smartphone oder ein Handscanner, z.B. eines Lieferanten oder Zustellers. Eine Vorrichtung gemäß dem dritten Aspekt der Erfindung kann aber beispielsweise auch ein Laptop oder ein anderes elektronisches Gerät, z.B. mit einer Ausgabe, sein. Eine Vorrichtung gemäß dem vierten Aspekt der Erfindung kann beispielsweise eine Fachanlage sein. In beispielhaften Ausführungsformen kann jede der vorbeschriebenen Vorrichtungen zur Ausführung und/oder Steuerung des Verfahrens gemäß dem jeweiligen Aspekt der Erfindung mit einer oder mehreren weiteren Vorrichtungen zusammenarbeiten. Eine Vorrichtung, die das Verfahren gemäß dem dritten Aspekt der Erfindung ausführt und/oder steuert, kann das beispielsweise mit Unterstützung von oder in Zusammenarbeit mit einer weiteren Vorrichtung tun, beispielsweise einem Server, der (Zwischen) Schritte des Verfahrens ausführt. Das Gleiche gilt entsprechend für Vorrichtungen, die Verfahren nach einem jeweiligen anderen Aspekt der Erfindung ausführen.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem jeweiligen Aspekt der Erfindung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Was die Terminologie betrifft, kann es sich bei einer "ersten Vorrichtung", einer "zweiten Vorrichtung" und einer "dritten Vorrichtung" jeweils um eine beliebige Vorrichtung handeln. Bei einer "ersten Vorrichtung" kann es sich aber beispielsweise auch um eine Vorrichtung gemäß dem ersten Aspekt der Erfindung handeln. Bei einer "zweiten Vorrichtung" kann es sich beispielsweise um eine Vorrichtung gemäß dem zweiten Aspekt der Erfindung handeln. Bei einer "dritten Vorrichtung" kann es sich beispielsweise auch um eine Vorrichtung gemäß dem dritten Aspekt der Erfindung handeln. Zudem kann beispielsweise die in den Verfahren gemäß verschiedenen Aspekten der Erfindung genannte "erste Vorrichtung" verfahrensübergreifend die gleiche Vorrichtung sein. Gleichermaßen kann beispielsweise die "zweite Vorrichtung" in den Verfahren gemäß verschiedenen Aspekten der Erfindung die gleiche Vorrichtung sein. Ebenso kann die "dritte Vorrichtung" in den Verfahren gemäß verschiedenen Aspekten der Erfindung die gleiche Vorrichtung sein.

Gleiches gilt für die "erste Information", die beispielsweise verfahrensübergreifend die gleiche Information sein kann, und die "zweite Information", die verfahrensübergreifend die gleiche Information sein kann.

### Beispielhafte Eigenschaften der beispielhaften Aspekte der Erfindung

Die verschiedenen beispielhaften Aspekte der vorliegenden Erfindung können u.a. die nachfolgend beschriebenen Eigenschaften aufweisen.

Eine Fachanlage umfasst eine Vielzahl von Fächern (also beispielsweise mehr als ein Fach oder mehr als zwei Fächer). Die Fächer sind beispielsweise zur Aufnahme von Sendungen (z.B. Briefe, Pakete, Päckchen), Lieferungen (z.B. gereinigte oder zu reinigende Wäsche, Gerichte von Lieferdiensten (z.B. eines Pizza- oder Sushi-Services), etc.) oder Gegenständen (z.B. Wertgegenstände, Gepäck, etc.) eingerichtet Die Fächer sind jeweils verschließbar, beispielsweise mittels einer jeweiligen Tür oder Klappe. Beispielsweise handelt es sich bei den Fächern um im Wesentlichen quaderförmige Aufnahmebehältnisse, die an einer oder mehreren Seiten mit Türen oder Klappen versehen sind. Beispielsweise sind in der Fachanlage mehrere Fächer übereinander und/oder nebeneinander angeordnet. Beispielsweise kann die Fachanlage aus einem oder mehreren nebeneinander angeordneten Modulen bestehen, wobei in jedem Modul eines oder mehrere Fächer übereinander angeordnet sind. Die jeweiligen Türen der Fächer sind dann beispielsweise seitlich angeschlagen und lassen sich beispielsweise nach vorne öffnen. Die Fächer der Fachanlage können alle die gleiche Größe aufweisen. Alternativ können zumindest einige Fächer der Fachanlage unterschiedliche Größen aufweisen. Die Fachanlage kann beispielsweise Fächer für Briefe (Brieffächer) und/oder Fächer für Pakete (Paketfächer) aufweisen. Die Brieffächer weisen beispielsweise innerhalb der Fachanlage jeweils die gleiche Größe auf, allerdings sind auch zwei oder mehr unterschiedliche Größen möglich. Die Paketfächer können in der Fachanlage mit lediglich einer gleichen oder mit unterschiedlichen Größen vertreten sein. Die Fachanlage kann beispielsweise als Paketfachanlage oder kombinierte Brief- und Paketfachanlage ausgebildet sein.

Jedes der Fächer ist beispielsweise mit einem jeweiligen Schloss versehen, um den Zugang von Benutzern zu den einzelnen Fächern der Fachanlage kontrollieren zu können. Das Schloss eines Fachs kann beispielsweise im oder am Fach angeordnet sein, beispielsweise an einer Tür (z.B. auch in Form einer Klappe) des Fachs. Wenn das Schloss nicht an der Tür angeordnet ist (also beispielsweise an einer Seitenwand des Fachs), wirkt es beispielsweise mit der Tür zusammen, indem beispielweise ein Riegel in eine Öffnung der Tür eingeführt bzw. wieder herausgezogen wird. Das Schloss eines Fachs kann beispielsweise standardmäßig in eine Verriegelungsposition zurückkehren und dann beispielsweise nur zur Entriegelung ansteuerbar sein. Nach erfolgter Entriegelung des Schlosses kann dann beispielsweise die Tür des Fachs geöffnet werden. Da das Schloss automatisch in die Verriegelungsposition zurückkehrt, kann eine Verriegelung des Fachs durch Schließen der Tür erzielt werden, beispielsweise in dem beim Schließen der Tür eine Fallenfunktion des Schlosses ausgenutzt wird.

Ein Fach der Fachanlage kann entweder offen oder geschlossen sein. Im offenen Zustand des Fachs ist das Schloss des Fachs entriegelt. Die Tür des Fachs kann dann beispielsweise ohne Gewaltanwendung durch eine Person geöffnet werden oder steht offen. Im geschlossenen Zustand des Fachs ist das Schloss des Fachs hingegen verriegelt. Die Tür des Fachs kann dann beispielsweise nicht mehr ohne Gewaltanwendung durch eine Person geöffnet werden, die nicht zur Öffnung berechtigt ist.

Das Schloss eines jeweiligen Fachs ist beispielsweise steuerbar, insbesondere in elektronischer Form. Insbesondere kann zumindest der Prozess der Verriegelns und/oder Entriegelns des Schlosses gesteuert werden. Die Steuerung des Schlosses eines Fachs kann beispielsweise durch eine Schlosssteuereinheit erfolgen, wobei entweder jedem Schloss eine eigene Schlosssteuereinheit zugeordnet ist, oder eine (beispielsweise zentrale) Schlosssteuereinheit einige (z.B. diejenigen eines Moduls der Fachanlage) oder alle Schlösser der Fachanlage steuert. In ersterem Fall werden mehrere Schlosssteuereinheiten, beispielsweise alle Schlosssteuereinheiten oder diejenigen eines oder mehrerer Module der Fachanlage, beispielsweise durch eine übergeordnete Steuereinheit gesteuert, während in letzterem Fall beispielsweise eine jeweilige Verdrahtung zwischen der Schlosssteuereinheit und jedem der von ihr gesteuerten Schlösser besteht, wobei über eine jeweilige Verdrahtung übertragene Signale oder angelegte Spannungen dann nur jeweils dem Schloss zugeordnet sind, zu dem die Verdrahtung führt, aber nicht anderen Schlössern. Alternativ ist auch die Verwendung eines Busses denkbar, an dem sowohl die Schlosssteuereinheit als auch eine Vielzahl von Schlössern elektrisch angebunden sind. Dann ist allerdings in jedem Schloss eine Einheit zur Auswertung der über den Bus erhaltenen Steuersignale erforderlich, was die Schlösser komplexer und damit teurer gestaltet als im Falle der direkten Verdrahtung.

Eine Schlosssteuereinheit (insbesondere die zentrale Schlosssteuereinheit) kann beispielsweise nicht nur die Ansteuerung des Schlosses bzw. der Schlösser besorgen, sondern auch feststellen, ob eine erhaltene oder erfasste Information (beispielsweise auch eine als "zweite Information" bezeichnete Information) zum Zugang zu einem Fach oder mehreren Fächern der Fachanlage berechtigt. Wird festgestellt, dass die Information zum Zugang berechtigt, kann beispielsweise Zugang zu dem Fach oder den Fächern gewährt werden (z.B. durch Entriegelung der Tür des Fachs oder der Türen der Fächer). Wird festgestellt, dass die Information nicht zum Zugang berechtigt, kann beispielsweise Zugang zu dem Fach oder den Fächern verweigert werden (z.B. indem keine Entriegelung der Tür des Fachs oder der Türen der Fächer erfolgt).

Damit eine Fachanlage und/oder eine ihr zugehörige Einheit, z.B. eine Schlosssteuereinheit, und/oder ein System umfassend eine Fachanlage feststellen kann, ob eine zweite Information zum Zugang zu einem Fach oder mehreren Fächern der Fachanlage berechtigt, führt beispielsweise die Fachanlage oder ein System umfassend die Fachanlage die Schritte des Verfahren gemäß dem vierten beispielhaften Aspekt der Erfindung aus. Dabei wird im Folgenden vielfach beschrieben, dass eine Fachanlage einen oder mehrere Schritte des Verfahrens gemäß dem vierten Aspekt der Erfindung ausführt. Es ist zwar eine Ausführungsform des Verfahrens gemäß dem vierten Aspekt der Erfindung, dass die Fachanlage alle Schritte des Verfahrens gemäß dem vierten Aspekt der Erfindung ausführt. Die Beschreibung dieser Schritte soll aber ausdrücklich auch jeweils so verstanden werden, dass der jeweilige Schritt öder ein Teil desselben auch von einer anderen Vorrichtung ausgeführt werden kann, die beispielsweise Teil eines Systems ist, welches die Fachanlage umfasst

Das Feststellen, ob die zweite Information zum Zugang zu einem oder mehreren Fächern der Fachanlage berechtigt, wird im Verfahren gemäß dem vierten beispielhaften Aspekt der Erfindung basierend zumindest auf einer ersten Information und einem Hashwert durchgeführt. Diese erste Information und dieser Hashwert sind beispielsweise auch Teil der Verfahren gemäß dem ersten bis dritten Aspekt der Erfindung sein, wie auch die zweite Information.

### Beispielhafte Eigenschaften des Verfahrens gemäß dem ersten beispielhaften Aspekt der Erfindung

Das Verfahren gemäß dem ersten Aspekt der Erfindung umfasst das Bestimmen eines Hashwerts, wobei der Hashwert zumindest auf einer ersten Information und einer zweiten Information basiert. Ein Hashwert kann dabei beispielsweise eine Abbildung der ersten Information und/oder der zweiten Information sein. Die Abbildung kann beispielsweise mittels einer Funktion oder mittels eines Algorithmus erfolgen, wobei die erste und/oder die zweite Information ein Eingabewert der Funktion oder des Algorithmus ist. Die Abbildung ist dann beispielsweise der Ausgabewert des Algorithmus. Insbesondere kann die Abbildung derart sein, dass sich aus dem Hashwert nicht oder nicht ohne Weiteres die erste und/oder die zweite Information bestimmen lassen. Das bedeutet beispielsweise, dass die Abbildung für eine Vielzahl von Eingabewerten erzeugt werden muss, um herausfinden zu können, welcher Eingabewert auf den vorliegenden Hashwert abgebildet wird. Die verwendete Funktion oder der verwendete Algorithmus ist hingegen beispielsweise nicht invertierbar. Vorteilhafterweise kann die Funktion oder der Algorithmus zum Abbilden zudem beispielsweise Konfusion erreichen, sodass keine Beziehung zwischen Eingabewert und Ausgabewert der Funktion oder des Algorithmus erkennbar ist. Die Abbildung für gegebene Eingangswerte ist auch nicht notwendigerweise eindeutig, sie kann es aber sein. Ein simples Beispiel für eine Abbildung, die nicht invertierbar ist, ist die Quersumme einer Zahl.

Im Verfahren gemäß dem ersten Aspekt der Erfindung sind dabei der Hashwert und die zweite Information mit einem Fach einer Fachanlage assoziiert, wobei die zweite Information zum Zugang zu dem Fach der Fachanlage berechtigt.

Bei der zweiten Information kann es sich dabei beispielsweise um ein Kennwort, z.B. ein Klartextkennwort, handeln. Die zweite Information kann außerdem beispielsweise im Verfahren gemäß dem ersten Aspekt der Erfindung erzeugt werden. Die Erzeugung kann dabei z.B. pseudozufällig, zufällig, deterministisch und/oder abhängig von Parametern sein, wobei solche Parameter beispielsweise Uhrzeit, Datum, Erzeugungsort o.ä. betreffen können. Alternativ kann die zweite Information beispielsweise im Verfahren gemäß dem ersten Aspekt der Erfindung erhalten werden. In beispielhaften Ausführungsformen kann die zweite Information nur zum Zugang zu einem Fach der Fachanlage berechtigen. In anderen Ausführungsformen kann die zweite Information zusätzlich zum Zugang zu einem oder mehreren weiteren Fächern der Fachanlage berechtigen.

Das Format der zweiten Information ist beliebig, es kann sich z.B. um Buchstaben, Zahlen, Symbole, Muster, Bitfolgen o.ä. handeln. Auch eine Kombination der vorgenannten Formate ist möglich. Eine beispielhafte zweite Information könnte 5, 8, 9, 10, 20, 50, eine Anzahl zwischen den genannten Werten, oder mehr oder weniger alphanumerischen Zeichen umfassen oder daraus bestehen.

Die Assoziation der zweiten Information mit einem Fach einer Fachanlage ist beispielsweise bereits dadurch gegeben, dass die zweite Information zum Zugang zu dem Fach der Fachanlage berechtigt. Die Assoziation des Hashwerts mit dem Fach der Fachanlage ist beispielsweise dadurch gegeben, dass er beim Feststellen, ob die zweite Information zum Zugang zu einem oder mehreren Fächern der Fachanlage berechtigt, verwendbar und/oder erforderlich ist.

Die Assoziation der zweiten Information und/oder des Hashwerts mit dem Fach der Fachanlage kann aber jeweils auch wie folgt ausgeprägt sein. Beispielsweise können die zweite Information und/oder der Hashwert jeweils oder zusammen dem Fach einer Fachanlage zuordenbar sein. Diese Zuordenbarkeit kann beispielsweise erreicht werden, indem die zweite Information und/oder der Hashwert in jeweiligen Datenstrukturen, z.B. Datenbanken oder Speicherobjekten, so gespeichert wird, dass er und/oder sie dem Fach der Fachanlage zuordenbar ist. Die Zuordenbarkeit kann zusätzlich oder alternativ auch dadurch erreicht werden, dass die zweite Information und/oder der Hashwert jeweils beispielsweise mit einem Indikator verknüpft wird, der beispielsweise ebenfalls ausgegeben oder erhalten wird, wenn der Hashwert und/oder die zweite Information ausgegeben oder erhalten wird. Allerdings muss die Assoziation nicht bedeuten, dass sich der zweiten Information und/oder dem Hashwert jeweils entnehmen lässt, mit welchem Fach einer Fachanlage sie/er assoziiert ist. Insbesondere ist es beispielsweise nicht jeder beliebigen Vorrichtung möglich festzustellen, mit welchem Fach einer Fachanlage die zweite Information und/oder der Hashwert assoziiert ist. Zum Beispiel können nur eine oder mehrere der ersten, zweiten und dritten Vorrichtung feststellen, mit welchem Fach einer Fachanlage die zweite Information und/oder ein Hashwert assoziiert ist. Darüber hinaus erfordert das Feststellen, mit welchem Fach einer Fachanlage die zweite Information assoziiert ist, beispielsweise einen Zugriff auf den Hashwert und weitere Informationen.

Der Hashwert basiert allerdings nicht nur zumindest auf der zweiten Information, sondern darüber hinaus zumindest auf einer ersten Information.

Das Format der ersten Information ist beliebig, wie es auch schon für das Format der zweiten Information beschrieben wurde. Es kann sich z.B. um Buchstaben, Zahlen, Symbole, Muster, Bitfolgen o.ä. handeln. Die Art der ersten Information kann in verschiedenen Ausführungsformen der Erfindung verschieden sein. Ist der Hashwert beispielsweise eine Abbildung, die z.B. mittels einer Hashfunktion oder mittels eines Hashalgorithmus erhalten wurde, kann die erste Information beispielsweise ein Salz sein. Die erste Information kann dann beispielsweise an die zweite Information angehängt werden. Die beiden Informationen können dann beispielsweise der Eingabewert der Hashfunktion öder des Hashalgorithmus sein. Das Anhängen der ersten Information an die zweite Information erhöht so beispielsweise die Entropie des Eingabewerts.

Die erste Information ist außerdem mit einer ersten Vorrichtung assoziiert. Die Assoziation kann darin bestehen, dass die erste Vorrichtung die erste Information erzeugt, erhalten, bereitgestellt, gespeichert oder anderweitig verarbeitet hat, insbesondere im Zusammenhang mit dem Bestimmen eines oder mehrerer Hashwerte, die zumindest auf der ersten Information basieren. Die Assoziation kann zusätzlich oder alternativ derart sein, dass die erste Information z.B. einer Person, einem Unternehmen, einer Organisation oder einem System zugeordnet ist oder zuordenbar ist, welche, welcher oder welches die erste Vorrichtung steuert, kontrolliert oder verwaltet. Die Assoziation beinhaltet nicht notwendigerweise, dass sich der ersten Information selbst entnehmen lässt, mit welcher ersten Vorrichtung sie assoziiert ist.

Das Verfahren gemäß dem ersten Aspekt der Erfindung umfasst ferner das Ausgeben der ersten Information an eine zweite Vorrichtung (nachfolgend auch als "Broker" bezeichnet), wobei die zweite Vorrichtung nicht die Fachanlage ist. Zudem umfasst das Verfahren gemäß dem ersten Aspekt der Erfindung das Ausgeben des Hashwerts an die zweite Vorrichtung. Die erste Information und der Hashwert können zusammen, also beispielsweise in einer Nachricht, an die zweite Vorrichtung ausgegeben werden. Sie können aber auch getrennt, beispielsweise in unterschiedlichen Nachrichten und/oder unabhängig voneinander an die zweite Vorrichtung ausgegeben werden.

Eine Ausgabe kann dabei grundsätzlich beispielsweise an einem Bildschirm und/oder auf Papier gedruckt erfolgen, beispielsweise als Buchstaben und/oder Zahlen und/oder als optisches Muster, z.B. als Bar- oder QR-Code. Das kann auch beispielsweise derart erfolgen, dass eine andere Vorrichtung die ausgegebenen Informationen, z.B. die erste Information und/oder den Hashwert, erfassen oder erhalten kann, z.B. durch Scannen eines Bar- oder QR-Codes. So kann eine erste Vorrichtung beispielsweise eine Ausgabe an eine andere Vorrichtung vornehmen. Grundsätzlich kann eine Ausgabe aber auch mittels einer oder mehrerer Nachrichten, beispielsweise eines oder mehrerer Pakete eines Kommunikationsprotokolls, beispielsweise 3G, 4G, Bluetooth, Ethernet, oder NFC erfolgen. Informationen, z.B. die erste Information und/oder der Hashwert, können so beispielsweise über das Internet und/oder ein anderes Netzwerk an eine andere Vorrichtung ausgegeben werden. Die Ausgabe kann grundsätzlich verschlüsselt oder unverschlüsselt erfolgen, wobei für eine Verschlüsselung verschiedene Verschlüsselungsarten genutzt werden können, z.B. symmetrische oder asymmetrische Verschlüsselung.

Weiterhin umfasst das Verfahren gemäß dem ersten Aspekt der Erfindung das Ausgeben der zweiten Information an eine dritte Vorrichtung, sodass die zweite Information unter Verwendung der dritten Vorrichtung oder durch die dritte Vorrichtung an die Fachanlage ausgebbar oder für die Fachanlage bereitstellbar ist, wobei die dritte Vorrichtung nicht die Fachanlage ist. Insbesondere werden die erste Information und der Hashwert also beispielsweise an eine andere Vorrichtung ausgegeben als die zweite Information. Zudem wird die zweite Information beispielsweise in manchen Ausführungsformen nur an die dritte Vorrichtung ausgegeben, und nicht an weitere Vorrichtungen.

### Beispielhafte Eigenschaften des Verfahrens gemäß dem zweiten beispielhaften Aspekt der Erfindung

Das Verfahren gemäß dem zweiten Aspekt der Erfindung umfasst das Erhalten einer ersten Information von einer ersten Vorrichtung. Dabei ist die erste Information, beispielsweise wie zuvor beschrieben, mit der ersten Vorrichtung assoziiert.

Darüber hinaus umfasst das Verfahren gemäß dem zweiten Aspekt der Erfindung das Erhalten eines Hashwerts, wobei der Hashwert zumindest auf der ersten Information und einer zweiten Information basiert, wobei der Hashwert und die zweite Information mit einem Fach einer Fachanlage assoziiert sind, und wobei die zweite Information zum Zugang zu dem Fach der Fachanlage berechtigt. Die erste Information und der Hashwert können dabei zusammen oder separat erhalten werden, wie analog zur Ausgabe der ersten Information und des Hashwerts zuvor beschrieben.

Die Vorrichtung, die die erste Information und den Hashwert erhält, erhält aber beispielsweise nicht die zweite Information und hat auf die zweite Information auch sonst keinen Zugriff. Basierend auf der ersten Information und dem Hashwert ist es der Vorrichtung auch beispielsweise nicht oder praktisch nicht möglich, die zweite Information zu bestimmen. Insbesondere kann die Vorrichtung beispielsweise aus dem Hashwert, der beispielsweise eine Abbildung der ersten und zweiten Information ist, keine Rückschlüsse auf die zweite Information ziehen. Das kann selbst dann gelten, wenn die Vorrichtung Zugriff auf die erste Information hat.

Das Verfahren gemäß dem zweiten Aspekt der Erfindung umfasst ferner das Ausgeben des Hashwerts und der ersten Information an die Fachanlage, sodass für die Fachanlage, basierend zumindest auf der ersten Information und dem Hashwert, feststellbar ist, ob eine zweite Information zum Zugang zu einem oder mehreren Fächern der Fachanlage berechtigt. Die Ausgabe kann dabei so erfolgen, wie es bereits zur Ausgabe der ersten Information und des Hashwerts im Verfahren gemäß dem ersten Aspekt der Erfindung beschrieben wurde.

Damit der Hashwert und die erste Information an die Fachanlage ausgegeben werden können, mit deren Fach der Hashwert assoziiert ist, kann das Verfahren gemäß dem zweiten Aspekt der Erfindung das Feststellen derjenigen Fachanlage, mit deren Fach der Hashwert assoziiert ist, umfassen. Dieses Feststellen kann beispielsweise auf einem Indikator basieren, der dem Hashwert zugeordnet ist und beispielsweise ebenfalls im Rahmen des Verfahrens gemäß dem zweiten Aspekt der Erfindung erhalten wird. Andere Ausführungsformen sind auch möglich, sodass auch basierend darauf, wie und/oder von welcher Vorrichtung ein Hashwert erhalten wird, die Fachanlage feststellbar ist, mit deren Fach der Hashwert assoziiert ist. Besonders relevant ist dieses Feststellen beispielsweise, wenn eine Vorrichtung, die das Verfahren gemäß dem zweiten Aspekt der Erfindung ausführt, eine Vielzahl von Hashwerten und/oder ersten Informationen erhält und Hashwerte der Vielzahl von Hashwerten mit Fächern unterschiedlicher Fachanlagen assoziiert sind. Das Feststellen der Fachanlage, mit deren Fach ein Hashwert assoziiert ist, ermöglicht dann das Ausgeben des Hashwerts und der ersten Information, auf der der Hashwert basiert, an genau diese Fachanlage.

Die Fachanlage kann beispielsweise das Verfahren gemäß dem vierten Aspekt der Erfindung ausführen oder steuern.

### Beispielhafte Eigenschaften des Verfahrens gemäß dem dritten und vierten beispielhaften Aspekt der Erfindung

Das Verfahren gemäß dem vierten Aspekt der Erfindung umfasst das Erhalten eines Hashwerts und einer ersten Information von einer zweiten Vorrichtung, wobei der Hashwert mit einem Fach der Fachanlage assoziiert ist, und wobei die erste Information mit einer ersten Vorrichtung assoziiert ist. Dabei basiert der Hashwert beispielsweise zumindest auf der ersten Information. Der Hashwert und die erste Information können dabei auch im Verfahren gemäß dem vierten Aspekt der Erfindung beispielsweise zusammen oder separat erhalten werden, wie analog zur Ausgabe der ersten Information und des Hashwerts für die Verfahren gemäß dem ersten und zweiten Aspekt der Erfindung zuvor beschrieben.

Ferner umfasst das Verfahren gemäß dem vierten Aspekt der Erfindung das Erhalten oder Erfassen einer zweiten Information.

Die zweite Information kann dabei im Rahmen eines Verfahren gemäß dem dritten Aspekt der Erfindung übermittelt oder bereitgestellt werden. Insbesondere umfasst das Verfahren gemäß dem dritten Aspekt der Erfindung, welches beispielsweise von einer mobilen Vorrichtung ausgeführt oder gesteuert werden kann, das Erhalten oder Erfassen einer zweiten Information von einer ersten Vorrichtung, wobei die zweite Information mit einem Fach einer Fachanlage assoziiert ist, wobei die zweite Information zum Zugang zu dem Fach der Fachanlage berechtigt, und wobei die erste Vorrichtung nicht die Fachanlage ist. Zudem umfasst das Verfahren gemäß dem dritten Aspekt der Erfindung - beispielsweise im Anschluss an oder in Reaktion auf das Erhalten oder Erfassen der zweiten Information - das Übermitteln der zweiten Information an die Fachanlage oder Bereitstellen der zweiten Information für die Fachanlage, sodass für die Fachanlage, basierend zumindest auf einer ersten Information und einem Hashwert, feststellbar ist, ob die zweite Information zum Zugang zu einem oder mehreren Fächern der Fachanlage berechtigt, wobei die erste Information mit der ersten Vorrichtung assoziiert ist.

Die zweite Information kann von einer Fachanlage beispielsweise über eine InternetVerbindung, eine Funk-Verbindung wie Bluetooth, NFC, WLAN, 4G, 5G und/oder beispielsweise indem ein optisches Muster wie ein Bar- oder QR-Code, welches z.B. auf einem Bildschirm der Vorrichtung, die die zweite Information übermittelt oder bereitstellt, angezeigt wird, erfasst oder erhalten werden. Das Erhalten oder Erfassen der zweiten Information kann aber auch auf indirektem Weg erfolgen, also beispielsweise indem die Vorrichtung, von der die zweite Information erhalten wird, die zweite Information an eine Weiterleitungs-Vorrichtung übermittelt und die zweite Information von der Weiterleitungs-Vorrichtung erhalten wird. Zusätzlich oder alternativ kann die zweite Information beispielsweise auch erhalten werden, indem die Vorrichtung, von der die zweite Information erhalten wird, die zweite Information bereitstellt, indem sie die zweite Information beispielsweise als Buchstaben und/oder Zahlen anzeigt. Dann kann beispielsweise eine Person diese Anzeige ablesen. Anschließend kann die zweite Information dann beispielsweise über eine Tastatur oder eine andere Erfassungseinheit der Vorrichtung oder Fachanlage, die die zweite Information erhält oder erfasst, von der Person eingegeben werden, sodass die zweite Information auf diesem Wege erhalten oder erfasst wird.

Das Übermitteln und/oder das Bereitstellen der zweiten Information und das entsprechende Erfassen oder Erhalten der zweiten Information kann beispielsweise nur derart möglich sein, dass eine Vorrichtung und/oder ein Benutzer, der die zweite Information übermitteln und/oder bereitstellen möchte, sich in der Nähe der erfassenden oder erhaltenden Vorrichtung befinden muss (also z.B. in einer Entfernung von weniger als einer Armlänge, 1 m, 5 m, 10 m, 50 m, 1 km, innerhalb derselben Funkzelle, in Reichweite einer Nahbereichs-Funkverbindung, z.B. NFC- oder WLAN- oder Bluetooth-Verbindung, oder in Sichtweite) und/oder dass eine zweite Information nur in einer vorbestimmten, z.B. maximalen, Geschwindigkeit übermittelt und/oder bereitgestellt und/oder erhalten und/oder erfasst werden kann. Ein Beispiel dafür ist eine Bluetooth- oder NFC-Übertragung von beispielsweise einem Smartphone zu der Fachanlage. Ein weiteres Beispiel ist die Bereitstellung eines oder mehrerer optischer Muster durch eine mobile Vorrichtung und das Erfassen des oder der Muster durch beispielsweise eine Fachanlage. Ein weiteres Beispiel ist eine Benutzereingabe an der Fachanlage, wobei die eingegebene Information beispielsweise der von einer mobilen Vorrichtung bereitgestellten und durch einen Benutzer abgelesenen zweiten Information entspricht.

Eine beispielhafte Begrenzung der maximal und/oder praktisch erreichbaren Geschwindigkeit der Übermittlung/des Bereitstellens/des Erhaltens/des Erfassens der zweiten Information kann unter Sicherheitsaspekten vorteilhaft sein. Denn ein Angreifer kann beispielsweise versuchen, z.B. im Rahmen einer Brute-Force-Attacke, eine Vielzahl von zweiten Informationen an eine Fachanlage zu senden, um zu testen, ob eine oder mehrere dieser zweiten Informationen zum Zugang zu einem oder mehreren Fächern der Fachanlage berechtigen (er versucht also eine zum Zugang berechtigende zweite Information zu erraten). Indem beispielsweise die maximale und/oder praktisch erreichbare Geschwindigkeit der Übermittlung/des Bereitstellens/des Erhaltens/des Erfassens der zweiten Information begrenzt ist, steigert sich die Zeit, die pro zweiter Information zur Übermittlung benötigt wird. Ein Angriff, der darauf basiert, dass möglichst viele zweite Informationen übermittelt werden (der Angreifer also möglichst viele Rateversuche machen möchte), dauert dann also länger, als wenn die zweite Information schneller übermittelt werden kann. Eine zweite Information ist aber beispielsweise nur eine begrenzte Zeit gültig. Je langsamer die Übertragung von zweiten Informationen ist, desto weniger zweite Informationen kann ein Angreifer in dieser begrenzten Zeit ausprobieren. Damit sinkt die Wahrscheinlichkeit, dass ein Angreifer zufällig eine zweite Information an eine Fachanlage übermittelt, die tatsächlich zum Zugang berechtigt (also zufällig richtig rät). Beispielsweise werden somit Brute-Force-Angriffe erschwert. Beispielsweise kann dann im Gegenzug die Länge der zweiten Information, die an die Fachanlage übermittelt werden, um Zugang zu einem oder mehreren Fächern der Fachanlage zu erhalten, reduziert werden. Denn die Zeit, die für einen Brute-Force-Angriff benötigt wird, ist dann beispielsweise dennoch nicht geringer oder signifikant geringer als wenn die zweite Information länger wäre, aber schneller übermittelt werden könnte. Eine solche Reduktion der Länge ist beispielsweise vorteilhaft, weil dann insgesamt weniger Daten übertragen und/oder verarbeitet werden müssen, beispielsweise an der Fachanlage und/oder an einer Vorrichtung, die die Daten an diese übermittelt oder für diese bereitstellt. Auch das beispielhafte Erfordernis, dass eine Vorrichtung und/oder ein Benutzer sich zum Übermitteln der zweiten Information an eine Fachanlage in physikalischer Nähe der Fachanlage befinden muss, kann beispielsweise die Sicherheit der Fachanlage erhöhen, indem die Fachanlage nicht von einem entfernten Ort, beispielsweise über das Internet, angegriffen werden kann.

Darüber hinaus erreicht eine Übertragung der zweiten Information, welche keinen Gebrauch von einer Internetverbindung macht, den Vorteil, dass die Vorrichtung, die die zweite Information erhält oder erfasst, z.B. eine Fachanlage, und/oder die Vorrichtung, die die zweite Information übermittelt oder bereitstellt, z.B. eine mobile Vorrichtung, zum Zeitpunkt der Übertragung der zweiten Information keine Internetverbindung benötigen. Das ist beispielsweise besonders vorteilhaft, wenn eine Fachanlage die zweite Information von einem Smartphone beispielsweise an einem Ort erhalten soll, an dem es keine stabile Internetverbindung gibt. Das kann beispielsweise in einer Tiefgarage oder ländlichen Gegenden der Fall sein, wo die Mobilfunknetzabdeckung als Grundlage für eine stabile Internetverbindung nicht ausreichend ist.

Zwar kann beispielsweise das Ausgeben und Erhalten einer ersten Information und eines Hashwertes von einer zweiten Vorrichtung an eine Fachanlage sowie das Ausgeben und Erhalten einer zweiten Information von einer ersten Vorrichtung an eine mobile Vorrichtung eine jeweilige Internetverbindung erfordern. Diese Internetverbindungen sind dann beispielsweise erforderlich, bevor ein Benutzer eine für ihn in eine Fachanlage eingestellte Sendung abholen kann oder bevor ein Lieferant eine Sendung in eine Fachanlage einstellen kann, also insbesondere bevor im Verfahren gemäß dem vierten Aspekt festgestellt wird, basierend zumindest auf der ersten Information und dem Hashwert, ob die zweite Information zum Zugang zu einem oder mehreren Fächern der Fachanlage berechtigt. Es genügt aber, dass die Internetverbindungen jeweils zu irgendeinem Zeitpunkt vor diesem Feststellen kurzzeitig vorhanden waren. Insbesondere kann auf diese Art und Weise eine Fachanlage beispielsweise in einer Tiefgarage zuverlässiger funktionieren, als wenn eine Internetverbindung zu einem Server für,dieses Feststellen erforderlich ist.

### Weitere beispielhafte Ausführungsformen der beispielhaften Aspekte der Erfindung

Beispielhafte Ausführungsformen und weitere Vorteile der beispielhaften Aspekte der Erfindung werden nachfolgend beschrieben, wobei deren Offenbarung jeweils für alle vier Aspekte der Erfindung gleichermaßen gelten soll.

Gemäß einer beispielhaften Ausführungsform des vierten Aspekts der Erfindung umfasst das Feststellen, ob die zweite Information zum Zugang zu einem oder mehreren Fächern der Fachanlage berechtigt, das Bestimmen eines Prüfhashwerts, wobei der Prüfhashwert zumindest auf der ersten Information und der zweiten Information basiert. Das Bestimmen des Prüfhashwerts kann dabei nach dem gleichen Verfahren ablaufen wie das Bestimmen des Hashwertes im Verfahren gemäß dem ersten Aspekt der Erfindung.

Gemäß einer beispielhaften Ausführungsform des vierten Aspekts der Erfindung umfasst das Feststellen, ob die zweite Information zum Zugang zu einem oder mehreren Fächern der Fachanlage berechtigt, ferner ein Vergleichen des Prüfhashwerts mit einem oder mehreren Hashwerten einer Vielzahl von Hashwerten, die jeweils mit einem Fach der Fachanlage assoziiert sind. Dabei kann beispielsweise bei einer Übereinstimmung des Prüfhashwertes mit einem Hashwert der Vielzahl von Hashwerten festgestellt werden, dass die zweite Information zum Zugang zu einem Fach der Fachanlage berechtigt. Gibt es keine Übereinstimmung des Prüfhashwertes mit einem Hashwert der Vielzahl von Hashwerten, kann beispielsweise festgestellt werden, dass die zweite Information nicht zum Zugang zu einem Fach der Fachanlage berechtigt. Gibt es keine Übereinstimmung des Prüfhashwertes mit einem Hashwert der Vielzahl von Hashwerten kann aber in manchen Ausführungsformen auch ein neuer Prüfhashwert bestimmt werden, beispielsweise nach einem anderen Verfahren. Alternativ oder zusätzlich kann das gleiche Verfahren mit einer anderen Konfiguration verwendet werden. Anschließend kann auch der neu bestimmte Prüfhashwert beispielsweise mit einem oder mehreren Hashwerten einer Vielzahl von Hashwerten, die jeweils mit einem Fach der Fachanlage assoziiert sind, verglichen werden. Das Ergebnis der Prüfung kann dann ausfallen wie zuvor zum (ersten) Prüfhashwert beschrieben.

Gemäß einer beispielhaften Ausführungsform des vierten Aspekts der Erfindung kann beim Feststellen, ob die zweite Information zum Zugang zu einem oder mehreren Fächern der Fachanlage berechtigt, durch das Vergleichen des Prüfhashwerts mit einem oder mehreren Hashwerten der Vielzahl von Hashwerten oder unter Verwendung des Vergleichens des Prüfhashwerts mit einem oder mehreren Hashwerten der Vielzahl von Hashwerten festgestellt werden, zu welchem Fach der Fachanlage oder zu welchen Fächern der Fachanlage die zweite Information zum Zugang berechtigt. Beispielsweise kann eine Fachanlage, die das Feststellen durchführt, Zugriff auf eine Zuordnung von Hashwerten zu jeweiligen Fächern der Fachanlage haben, beispielsweise entsprechend der Assoziation von Hashwerten mit jeweiligen Fächern der Fachanlage. Bei einer Übereinstimmung des Prüfhashwertes mit einem Hashwert der Vielzahl von Hashwerten kann dann beispielsweise festgestellt werden, dass die zweite Information zum Zugang zu dem Fach der Fachanlage berechtigt, dem der Hashwert zugeordnet ist. Vorteilhafterweise ist es somit nicht notwendig, dass eine Fachanlage neben der zweiten Information eine Information erhält, die spezifiziert, für welches Fach der Fachanlage die zweite Information möglicherweise zum Zugang berechtigt.

Das Verfahren gemäß einer beispielhaften Ausführungsform des vierten Aspekts der Erfindung kann das Erhalten, z.B. durch eine Fachanlage, einer oder der Vielzahl von Hashwerten, die jeweils mit einem Fach der Fachanlage assoziiert sind, umfassen. Die Vielzahl von Hashwerten kann dabei beispielsweise von der zweiten Vorrichtung erhalten werden, von der auch der Hashwert und die erste Information erhalten wurde. Das Erhalten kann dabei derart erfolgen, dass mehrere oder alle Hashwerte der Vielzahl von Hashwerten zusammen oder gleichzeitig erhalten werden. Alternativ ist auch der Erhalt mehrerer oder aller Hashwerte der Vielzahl von Hashwerten nacheinander möglich.

Gemäß einer beispielhaften Ausführungsförm kann die Vielzahl von Hashwerten einen oder mehrere Hashwerte umfassen, die jeweils zumindest auf der ersten Information basieren. Der eine oder die mehreren Hashwerte, die jeweils zumindest auf der ersten Information basieren, können beispielsweise im Verfahren gemäß dem ersten Aspekt der Erfindung bestimmt werden. Sie können dabei beispielsweise Hashwerte einer Vielzahl von Hashwerten sein, die jeweils zumindest auf der ersten Information basieren und in einer beispielhaften Ausführungsform gemäß dem ersten Aspekt der Erfindung bestimmt werden. Der Hashwert, der im Verfahren gemäß dem zweiten Aspekt der Erfindung erhalten wird, kann dann in einer beispielhaften Ausführungsform des Verfahrens gemäß dem zweiten Aspekt der Erfindung ein Hashwert dieser Vielzahl von Hashwerten sein. Dabei können die Hashwerte der Vielzahl von Hashwerten, z.B. alle oder manche, jeweils auf verschiedenen, z.B. jeweils einzigartigen, zweiten Informationen basieren, während sie zumindest auf der gleichen ersten Information basieren.

Dabei findet in einer beispielhaften Ausführungsform gemäß dem ersten Aspekt der Erfindung das Bestimmen der Vielzahl von Hashwerten, die jeweils zumindest auf der ersten Information basieren, nur in einem vorbestimmten Zeitraum statt. Dabei werden in einem anderen vorbestimmten Zeitraum Hashwerte bestimmt, die jeweils statt zumindest auf der ersten Information zumindest auf einer anderen Information basieren. Also beispielsweise wird im Verfahren gemäß dem ersten Aspekt der Erfindung eine erste Information nur in einem vorbestimmten Zeitraum zur Bestimmung von Hashwerten verwendet. Dann wird die erste Information gewechselt. Der vorbestimmte Zeitraum kann dabei beispielsweise eine Stunde, ein Tag, eine Woche, ein Monat, ein Jahr oder ein beliebiger anderer Zeitraum sein.

Das Bestimmen einer Vielzahl von Hashwerten, die jeweils zumindest auf der ersten Information basieren, kann besonders vorteilhaft sein. Ein besonders vorteilhaftes Szenario ist dabei wie folgt. Im Rahmen des Verfahrens gemäß dem vierten Aspekt der Erfindung kann eine Fachanlage eine Vielzahl von Hashwerten und jeweilige zugehörige erste Informationen z.B. von einer zweiten Vorrichtung erhalten, wobei die Hashwerte zumindest auf der jeweiligen ersten Information basieren. Anschließend erhält die Fachanlage eine zweite Information. Um festzustellen, ob die zweite Information zum Zugang zu einem oder mehreren Fächern der Fachanlage berechtigt, bestimmt die Fachanlage einen Prüfhashwert, wobei der Prüfhashwert zumindest auf einer ersten Information und der (erhaltenen) zweiten Information basiert. Die Fachanlage kann aber beispielsweise an der zweiten Information nicht erkennen, ob und auf welcher ersten Information ein Hashwert gegebenenfalls basiert, der zumindest auf der zweiten Information basiert. Die Fachanlage muss also beispielsweise pro erhaltener erster Information einen Prüfhashwert bestimmen, der auf der zweiten und der jeweiligen ersten Information basiert. Es ist daher beispielsweise effizient, wenn eine Fachanlage zwar eine Vielzahl von Hashwerten, die jeweils mit einem Fach der Fachanlage assoziiert sind, erhält, die Vielzahl aber mehrere Hashwerte umfasst, die jeweils zumindest auf der gleichen ersten Information basieren. Das kann beispielsweise die Anzahl der zu bestimmenden Prüfhashwerte senken. Damit kann die Effizienz beispielsweise umso mehr erhöht werden, je aufwendiger das Bestimmen eines Prüfhashwerts ist.

Der Prüfhashwert kann gemäß einer beispielhaften Ausführungsform des Verfahrens nach dem vierten Aspekt der Erfindung ein Ausgabewert eines Hashalgorithmus sein, wobei zumindest die erste Information und die zweite Information Eingabewerte des Hashalgorithmus sind. Gleichermaßen kann der Hashwert gemäß einer beispielhaften Ausführungsform des Verfahrens gemäß aller Aspekte der Erfindung ein Ausgabewert eines Hashalgorithmus sein, wobei zumindest die erste Information und die zweite Information Eingabewerte des Hashalgorithmus sind. Für das Bestimmen des Prüfhashwerts und für das Bestimmen des Hashwerts kann beispielsweise der gleiche Hashalgorithmus z.B. mit einer identischen Konfiguration verwendet werden. Gemäß einer beispielhaften Ausführungsform aller Aspekte der Erfindung ist die erste Information eine Zusatzinformation für einen Hashalgorithmus, die dazu bestimmt ist, die Sicherheit des Hashalgorithmus zu erhöhen. Gemäß einer beispielhaften Ausführungsform aller Aspekte der Erfindung kann die erste Information z.B. ein Salz, z.B. des vorbeschriebenen Hashalgorithmus, sein. Im Kontext der Erfindung bedeutet also beispielsweise, dass es eine Vielzahl von Hashwerten geben kann, die jeweils mit einem Fach einer Fachanlage (derselben Fachanlage oder jeweils unterschiedlichen Fachanlagen) assoziiert sind, die von der gleichen Vorrichtung bestimmt werden, und die jeweils zumindest auf der gleichen ersten Information, d.h. dem gleichen Salz, basieren. Ein Salz bezeichnet dabei z.B. eine (möglicherweise zufällig gewählte) Zusatzinformation, die an eine andere Information (z.B. einen Eingabewert eines Hashalgorithmus) vor deren weiterer Verarbeitung (z. B. Eingabe in einen Hashalgorithmus) angehängt wird. Das kann beispielsweise dazu dienen, die Entropie der Eingabe zu erhöhen. Dadurch werden beispielsweise Wörterbuch-Angriffe und Brute-Force-Attacken erschwert. In anderen Ausführungsformen aller Aspekte der Erfindung kann die erste Information z.B. ein Pepper oder ein Padding sein. Ein Pepper bezeichnet dabei z.B. eine geheime Zusatzinformation, die an eine andere Information (z.B. einen Eingabewert eines Hashalgorithmus) vor deren weiterer Verarbeitung (z. B. Eingabe in einen Hashalgorithmus) angehängt wird. Damit können beispielsweise Wörterbuch- und Brute-Force-Attacken erschwert werden: Ein Padding bezeichnet z.B. eine Zusatzinformation, die einer anderen Information (z.B. einen Eingabewert eines Hashalgorithmus) vor deren weiterer Verarbeitung (z. B. Eingabe in einen Hashalgorithmus) vorangestellt oder an sie angehängt wird, um die Länge oder den Anfang und/oder das Ende der Information zu verschleiern.

Der Hashalgorithmus kann beispielsweise ein Hashalgorithmus sein, dessen Hashaufwand konfigurierbar ist, beispielsweise durch Parameter. Zum Beispiel kann konfigurierbar sein, wie der Speicherplatzbedarf des Hashalgorithmus beim Hashen ist. Zusätzlich oder alternativ kann beispielsweise konfigurierbar sein, wie viele Iterationen eines oder mehrerer Berechnungsschritte durchgeführt werden müssen. Als Beispiel für einen solchen Algorithmus wird im Folgenden ein Argon2-Algorithmus betrachtet, z.B. wie in der Version 1.3 der Spezifikation "Argon2: the memory-hard function for password hashing and other applications" der Autoren Alex Biryukov, Daniel Dinu und Dmitry Khovrätovich der University of Luxembourg, datiert auf den 24. März 2017, beschrieben. Ein solcher Algorithmus läuft beispielsweise nur effizient auf üblicher Server-Hardware oder PC-Hardware aufx86-Basis. Die im Stand der Technik bekannte Methode, manche Hashverfahren mit spezieller Hardware in Form von Grafikkarten oder Spezial-CPUs anzugreifen, wird dadurch erschwert, dass sich die Algorithmen der Argon2-Familie so konfigurieren lassen, dass sie viel Speicherplatz und/oder vergleichbar viel Zeit pro Hashvorgang benötigen. Das ermöglicht es, die steigende Leistungsfähigkeiten neuerer Prozessoren allein durch die Wahl der zum Hashwert gehörenden Parameter auszugleichen. Deshalb reicht eine vergleichsweise kurze zweite Information aus, um mit einem Hashwert, der auf der zweiten Information basiert, ein angemessenes Sicherheitsniveau zu erreichen. Das gilt insbesondere dann, wenn die Geschwindigkeit der Übertragung einer zweiten Information an eine Fachanlage begrenzt ist und/oder z.B. nicht über das Internet erfolgen kann. Ein entsprechendes Sicherheitsniveau könnte jedoch beispielsweise nicht mit Hashalgorithmen erreicht werden, die schnell und leicht durchführbar sind oder sein sollen. Das kann z.B. bei Hashalgorithmen der Fall sein, deren Zweck lediglich ist, die Integrität und/oder Authentizität von Daten überprüfbar zu machen.

Darüber hinaus kann eine zweite Information beispielsweise zum Zugang zu nur einem Fach der Fachanlage berechtigen. Selbst ein "Erraten" einer zum Zugang berechtigenden zweiten Information durch einen Angreifer kann somit beispielsweise nur zu einer sehr begrenzten Kompromittierung der Fachanlage führen.

Außerdem kann die zweite Information gemäß einer beispielhaften Ausführungsform aller Aspekte der Erfindung nur in einem vorbestimmten Zeitraum zum Zugang zu dem Fach der Fachanlage, mit dem sie assoziiert ist, berechtigen. Das erschwert einem Angreifer das Erraten einer zum Zugang berechtigenden zweiten Information, insbesondere z.B. im Vergleich zu einem Zugangsberechtigungsnachweis wie einer Benutzerkennung, der konstant ist. Das gilt insbesondere in Kombination mit den vorbeschriebenen Maßnahmen zur Erhöhung der Sicherheit. Zudem kann beispielsweise ein "Trio" aus einer zweiten Information, einer ersten Information und einem Hashwert, der zumindest auf dieser zweiten Information und dieser ersten Information basiert, nur für einen einmaligen Zugangsberechtigungsnachweis bestimmt und/oder verwendet werden. Damit wird die Sicherheit beispielsweise im Vergleich zu einem Kennwort, das z.B. ein Nutzer festlegt und/oder das er vielfach als Zugangsberechtigungsnachweis verwenden kann, erhöht.

Die Sicherheit der Verfahren gemäß allen Aspekten der Erfindung kann beispielsweiter weiter erhöht werden, wenn gemäß einer beispielhaften Ausführungsform die zweite Information zufällig (bzw. pseudozufällig) bestimmt wird, beispielsweise von der ersten Vorrichtung. Das kann besonders vorteilhaft sein, wenn eine Vielzahl von Hashwerten, die jeweils mit einem Fach der Fachanlage assoziiert sind, jeweils zumindest auf der gleichen ersten Information basieren oder basieren können. Denn selbst dann basiert ein Hashwert, der zumindest auf einer ersten Information und einer zweiten Information basiert, zumindest teilweise auf einem zufälligen Anteil (der zweiten Information), auf dem regelmäßig kein anderer Hashwert basiert.

Zusätzlich oder alternativ können weitere Maßnahmen die Sicherheit der Verfahren gemäß allen Aspekten der Erfindung verbessern. Beispielsweise können die erste Information, die zweite Information und/oder der Hashwert verschlüsselt und/oder signiert übertragen werden. In einer beispielhaften Ausführungsform gemäß dem ersten Aspekt der Erfindung erfolgt insbesondere das Ausgeben des Hashwerts verschlüsselt und/oder mit einer asymmetrischen Signatur. In einer beispielhaften Ausführungsform gemäß dem zweiten Aspekt der Erfindung erfolgt das Erhalten des Hashwerts dann verschlüsselt und/oder mit einer asymmetrischen Signatur. Derart kann beispielsweise eine Vorrichtung, die den Hashwert erhält, prüfen, ob die Verbindung, über die der Hashwert erhalten wurde, korrekt ist. Sie kann die Korrektheit der Verbindung z.B. durch TLS-Prüfung gegen ein gepinntes Zertifikat feststellen.

Alternativ oder zusätzlich kann das Verfahren gemäß dem ersten Aspekt der Erfindung in einer beispielhaften Ausführungsform das Ausgeben eines Zählers, der dem Hashwert zuordenbar ist, umfassen. Das Verfahren gemäß dem zweiten Aspekt der Erfindung kann dann beispielsweise das Erhalten eines Zählers, der dem Hashwert zuordenbar ist, umfassen. Derart kann beispielsweise eine Vorrichtung, die den Hashwert und den Zähler erhält, die Integrität des erhaltenen Hashwerts überprüfen. Sie kann die Integrität dabei z.B. prüfen, indem sie feststellt, ob der Zähler, der dem Hashwert zuordenbar ist, erhöht ist im Vergleich zu einem Zähler, der einem zuvor erhaltenen Hashwert zuordenbar ist. Bei der Integritätsprüfung kann beispielsweise auch eine Gültigkeitsdauer des Hashwerts berücksichtigt werden.

Weitere Prüfungsschritte sind im Verfahren gemäß dem zweiten Aspekt der Erfindung möglich. Beispielsweise kann die die Zulässigkeit eines erhaltenen Hashwerts geprüft werden. Diese Prüfung kann beispielsweise darauf basieren, auf welche Art, also z.B. in welchem Format, der Hashwert erhalten wurde. Alternativ oder zusätzlich können weitere Informationen bei der Prüfung berücksichtigt werden. Beispielsweise können weitere Informationen wie eine PartnerID, die sich auf eine Organisation bezieht, die die erste Vorrichtung kontrolliert, eine FachanlagenID und/oder eine FachID jeweils erhalten werden und jeweils dem erhaltenen Hashwert zuordenbar sein. Das Verfahren gemäß dem zweiten Aspekt der Erfindung kann dann beispielsweise das Prüfen, ob der Hashwert unter Berücksichtigung der weiteren Informationen zulässig ist, umfassen.

Die Prüfungsschritte insbesondere betreffend eine Verbindungskorrektheitsprüfung; eine Integritätsprüfung und eine Zulässigkeitsprüfung wurden oben im Rahmen des Verfahrens gemäß dem zweiten Aspekt der Erfindung beschrieben. Alternativ oder zusätzlich können diese Prüfungen auch beispielsweise im Rahmen des Verfahrens gemäß dem vierten Aspekt der Erfindung durchgeführt werden.

In einer beispielhaften Ausführungsform kann das Verfahren gemäß dem vierten Aspekt außerdem das Speichern der zweiten Information umfassen, insbesondere wenn, basierend zumindest auf der ersten Information und dem Hashwert, festgestellt wurde, dass die zweite Information zum Zugang zu einem oder mehreren Fächern der Fachanlage berechtigt. Die gespeicherte zweite Information kann dann als Nachweis dafür dienen, dass die zweite Information im Klartext erhalten oder erfasst wurde, z.B. bevor der Zugang zu einem Fach gewährt wurde. Diese Nachweisfunktion wird ermöglicht, indem beispielsweise ausgehend von der ersten Information und dem Hashwert praktisch keine Rückschlüsse auf die zweite Information gezogen werden können. Eine Fachanlage, die das Verfahren gemäß dem vierten Aspekt der Erfindung ausführt, und eine Vorrichtung, die das Verfahren gemäß dem zweiten Aspekt der Erfindung ausführt, verfügen aber beispielsweise nur über die erste Information und den Hashwert. Selbst wenn diese Fachanlage oder diese Vorrichtung von einem Angreifer kompromittiert würden, könnte der Angreifer die zweite Information basierend auf der ausgespähten ersten Information und dem ausgespähten Hashwert also nicht bestimmen. Daher kann das Speichern der zweiten Information z.B. an einer Fachanlage beispielsweise das Feststellen ermöglichen, welche Vorrichtungen kompromittiert oder nicht kompromittiert wurden, wenn ein Angreifer unbefugt mit einer zweiten Information Zugang zu einem Fach einer Fachanlage erhalten hat.

Dass ausgehend von der ersten Information und dem Hashwert praktisch keine Rückschlüsse auf die zweite Information gezogen werden können, kann darüber hinaus besonders vorteilhaft sein, wenn die zweite Vorrichtung gemäß einer beispielhaften Ausführungsform aller Aspekte der Erfindung nicht nur dazu eingerichtet ist, der Fachanlage den Hashwert zu übermitteln oder bereitzustellen, sondern auch dazu eingerichtet ist, mit einer Vielzahl von Fachanlagen zu kommunizieren. Würde die zweite Vorrichtung in dieser Situation kompromittiert und könnte ein Angreifer aus den ausgespähten Hashwerten und ersten Informationen Rückschlüsse auf jeweilige zweite Information ziehen, die zum Zugang zu jeweiligen Fächern von jeweiligen Fachanlagen berechtigen, könnte der Angreifer Zugriff auf eine Vielzahl von Fächern von einer Vielzahl von Fachanlagen erlangen. Ein solches Szenario wird verhindert, indem die zweite Vorrichtung nicht über zweite Informationen verfügt, die zum Zugang zu jeweiligen Fächern von jeweiligen Fachanlagen berechtigen.

Zudem kann gemäß einer beispielhaften Ausführungsform aller Aspekte der Erfindung die erste Vorrichtung nicht dazu eingerichtet sein, der Fachanlage den Hashwert zu übermitteln und/oder dazu eingerichtet sein, der Fachanlage den Hashwert nicht zu übermitteln. Die erste Vorrichtung kann beispielsweise nicht dazu autorisiert sein und/oder keine Kommunikationsverbindung zu der Fachanlage oder zu irgendeiner Fachanlage überhaupt haben. Somit kann beispielsweise eine Trennung erreicht werden zwischen der ersten Vorrichtung, die beispielsweise nur wenige Hashwerte, die jeweils zumindest auf einer ersten Information und einer zweiten Information basieren, bestimmt, und einer zweiten Vorrichtung, die beispielsweise von vielen ersten Vorrichtungen viele Hashwerte und zugehörige erste Informationen erhält und diese an jeweilige Fachanlagen ausgibt. Diese Trennung kann dazu führen, dass ein Angreifer statt einer zentralen (zweiten) Vorrichtung eine Vielzahl von ersten Vorrichtungen angreifen muss, um eine Vielzahl von zweiten Informationen, die zum Zugang zu jeweiligen Fächern von jeweiligen Fachanlagen berechtigen, auszuspähen. Das erhöht den Aufwand für den Angreifer und somit die Sicherheit des Systems.

Beispielhaft wird zudem ein weiteres Verfahren offenbart, das beispielsweise von einer Fachanlage ausgeführt wird und umfasst: Erhalten oder Erfassen einer Information; Feststellen, basierend auf der Information, ob auf eine erste Art oder auf eine zweite Art festgestellt werden soll, ob eine zweite Information zum Zugang zu einem oder mehreren Fächern der Fachanlage berechtigt; wenn festgestellt wurde, dass auf die erste Art festgestellt werden soll, ob die zweite Information zum Zugang zu einem oder mehreren Fächern der Fachanlage berechtigt, Ausführen eines ersten Verfahrens, und wenn festgestellt wurde, dass auf die zweite Art festgestellt werden soll, ob die zweite Information zum Zugang zu einem oder mehreren Fächern der Fachanlage berechtigt, Ausführen eines zweiten Verfahrens zum Feststellen, ob die zweite Information zum Zugang zu einem oder mehreren Fächern der Fachanlage berechtigt. Das weitere Verfahren kann dabei beispielsweise im Zusammenhang mit den Verfahren gemäß den oben bereits beschriebenen Aspekten eins bis vier der Erfindung ausgeführt werden. Insbesondere kann dabei das in diesem Absatz als "erstes Verfahren" bezeichnete Verfahren das Verfahren nach dem vierten Aspekt der Erfindung sein. Das in diesem Absatz beschriebene weitere Verfahren wird hiermit aber auch ausdrücklich unabhängig von den Verfahren gemäß dem ersten bis vierten Aspekt der Erfindung offenbart.

Die Information, basierend auf der festgestellt wird, ob auf eine erste Art oder auf eine zweite Art festgestellt werden soll, ob eine zweite Information zum Zugang zu einem oder mehreren Fächern der Fachanlage berechtigt, kann dabei grundsätzlich beliebiger Art sein. Beispielsweise kann es sich um einen Buchstaben, eine Zahl, ein Muster, ein (Funk-)Signal oder eine Bitfolge handeln. Die Information kann zusammen mit oder separat von einer zweiten Information erhalten oder erfasst werden. Beispielsweise kann die erste Information ein Buchstabe sein, der einer Folge von alphanumerischen Zeichen, die die zweite Information darstellen, vorangestellt ist.

In einer beispielhaften Ausführungsform des weiteren Verfahrens ist das erste und/oder das zweite Verfahren zum Feststellen, ob die zweite Information zum Zugang zu einem oder mehreren Fächern der Fachanlage berechtigt, wissensbasiert und/oder besitzbasiert und/oder biometriebasiert. Also kann beispielsweise das erste Verfahren das Verfahren gemäß dem vierten Aspekt der Erfindung sein. Dieses Verfahren ist beispielsweise wissensbasiert und basiert beispielsweise auf einem "Trio" von einer ersten Information, einer zweiten Information und einem Hashwert, wobei die Kenntnis der zweiten Information dieses Trios beispielsweise zum einmaligen Zugang zu einem Fach der Fachanlage berechtigt. Das erste Verfahren ist also beispielsweise nicht nutzerabhängig. Also beispielsweise ist das erste Verfahren unabhängig davon, ob ein Lieferant oder ein Empfänger eine Sendung einstellt oder abholt. Insbesondere ist beispielsweise keine Benutzerkennung erforderlich.

Das zweite Verfahren kann beispielsweise biometriebasiert sein und somit abhängig von einem Nutzer feststellen, ob eine zweite Information zum Zugang berechtigt. Das zweite Verfahren kann alternativ oder zusätzlich besitzbasiert sein und erfordern, dass ein Nutzer beispielsweise eine bestimmte Vorrichtung besitzt, die beispielsweise mit einer einzigartigen Information gekennzeichnet ist, die beispielsweise von einer Fachanlage mittelbar oder unmittelbar erfasst, erhalten oder festgestellt werden kann.

In einer beispielshaften Ausführungsform kann das zweite Verfahren zum Feststellen, ob die zweite Information zum Zugang zu einem oder mehreren Fächern der Fachanlage berechtigt, unter Verwendung von Daten erfolgen, die einer Person oder einem Gerät zuordenbar sind. Diese Zuordenbarkeit kann beispielsweise durch eine entsprechende Speicherung der Daten z.B. in einer Datenbank erreicht werden kann. Es kann sich dabei beispielsweise um eine Benutzerkennung eines Empfängers oder Lieferanten handeln.

Indem beispielsweise eine Fachanlage, basierend auf einer erhaltenen oder erfassten Information, feststellen kann, ob auf eine erste Art oder auf eine zweite Art festgestellt werden soll, ob eine zweite Information zum Zugang zu einem oder mehreren Fächern der Fachanlage berechtigt, kann eine Fachanlage beispielsweise verschiedene Authentisierungs- bzw. Authentifizierungsmöglichkeiten unterstützen. Damit kann die Flexibilität der Fachanlage und entsprechender Verfahren zum Sicherstellen, dass nur berechtigte Nutzer Zugang zu Fächern der Fachanlage erhalten, erhöht werden, indem beispielsweise auf eine erste Art unabhängig von einem Nutzer als solchem festgestellt werden kann, ob eine zweite Information zum Zugang berechtigt, wobei auf eine zweite Art basierend auf Informationen zu einem speziellen Nutzer oder einer speziellen Nutzergruppe festgestellt werden kann, ob eine zweite Information zum Zugang berechtigt.

Für das weitere Verfahren werden außerdem ein Computerprogramm und eine Vorrichtung und ein System offenbart, wie es schon für jeden der oben beschriebenen vier Aspekte der .Erfindung offenbart wurde. Insbesondere wird also für das weitere Verfahren ein Computerprogramm offenbart, umfassend Programmanweisungen, die einen Prozessor zur Ausführung und/oder Steuerung des weiteren Verfahrens veranlassen, wenn das Computerprogramm auf dem Prozessor läuft. Außerdem wird insbesondere eine Vorrichtung oder ein System aus zwei, drei, vier oder mehr Vorrichtungen, eingerichtet zur Ausführung und/oder Steuerung des weiteren Verfahrens oder umfassend jeweilige Mittel zur Ausführung und/oder Steuerung der Schritte des weiteren Verfahrens offenbart. Darüber hinaus wird insbesondere eine Vorrichtung offenbart, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das weitere Verfahren auszuführen und/oder zu steuern. Für weitere Details zu beispielhaften Ausführungsformen des Computerprogramms, der Vorrichtung und des Systems wird ausdrücklich auf die obige Beschreibung zu den Computerprogrammen, den Vorrichtungen und den Systemen gemäß jedem der vier Aspekte der Erfindung verwiesen. Die dortigen Beschreibungen finden auch auf das hier beschriebene weitere Verfahren Anwendung.

Die oben beschriebenen Ausführungsbeispiele und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden. Die Reihenfolge der einzelnen Schritte in den Flussdiagrammen gibt nicht notwendigerweise die tatsächliche (zeitliche) Reihenfolge der Schritte vor und ist lediglich beispielhaft. Nichtsdestotrotz können die Schritte zeitlich in genau der Abfolge auftreten/durchgeführt werden, wie sie in den Flussdiagrammen dargestellt sind. Darüber hinaus können, müssen sie aber nicht in Reaktion aufeinander durchgeführt werden.

Es zeigen:
- Fig. 1: eine schematische Darstellung einer beispielhaften Ausführungsform eines Systems gemäß der vorliegenden Erfindung, beispielhaft umfassend eine oder mehrere Fachanlagen, eine oder mehrere mobile Vorrichtungen und zwei weitere Vorrichtungen, z.B. einen Server und einen Broker;
- Fig. 2: ein Flussdiagramm einer beispielhaften Ausführungsform eines Verfahrens gemäß dem ersten Aspekt der vorliegenden Erfindung, beispielsweise ausgeführt und/oder gesteuert von einer Vorrichtung, z.B. einem Server;
- Fig. 3: ein Flussdiagramm einer beispielhaften Ausführungsform eines Verfahrens gemäß dem zweiten Aspekt der vorliegenden Erfindung, beispielsweise ausgeführt und/oder gesteuert von einer Vorrichtung, z.B. einem Broker;
- Fig. 4: ein Flussdiagramm einer beispielhaften Ausführungsform eines Verfahrens gemäß dem vierten Aspekt der vorliegenden Erfindung, beispielsweise ausgeführt und/oder gesteuert von einer Fachanlage;
- Fig. 5: ein Flussdiagramm einer beispielhaften Ausführungsform eines weiteren Verfahrens, das beispielhaft das Verfahren gemäß dem vierten Aspekt der vorliegenden Erfindung beinhaltet, beispielsweise ausgeführt und/oder gesteuert von einer Fachanlage;
- Fig. 6: ein Flussdiagramm einer beispielhaften Ausführungsform eines Verfahrens gemäß dem dritten Aspekt der vorliegenden Erfindung, beispielsweise ausgeführt und/oder gesteuert von einer mobilen Vorrichtung;
- Fig. 7: eine schematische Darstellung einer beispielhaften Ausführungsform einer Vorrichtung gemäß dem ersten oder zweiten Aspekt der Erfindung, beispielsweise einem Server oder Broker;
- Fig. 8: eine schematische Darstellung einer beispielhaften Ausführungsform einer Vorrichtung gemäß dem vierten Aspekt der Erfindung, beispielsweise einer Fachanlage;
- Fig. 9: eine schematische Darstellung einer beispielhaften Ausführungsform einer Vorrichtung gemäß dem dritten Aspekt der Erfindung, beispielsweise einer mobilen Vorrichtung;
- Fig. 10: eine schematische Darstellung beispielhafter Datenübertragungen zwischen Vorrichtungen, insbesondere zwischen einer beispielhaften mobilen Vorrichtung, einer beispielhaften ersten Vorrichtung, einem beispielhaften Broker und einer beispielhaften Fachanlage, die jeweils beispielhafte Ausführungsformen von Verfahren gemäß einem jeweiligen Aspekt der Erfindung ausführen;
- Fig. 11: eine schematische Darstellung einer beispielhaften Ausführungsform eines Systems gemäß der vorliegenden Erfindung, beispielhaft umfassend eine Fachanlage, eine mobile Vorrichtung, einen Broker, eine erste Vorrichtung oder ein erstes System, z.B. einen Server oder ein Serversystem, und eine weitere Vorrichtung.

### Detaillierte Beschreibung einiger beispielhafter Ausführungsformen der Erfindung

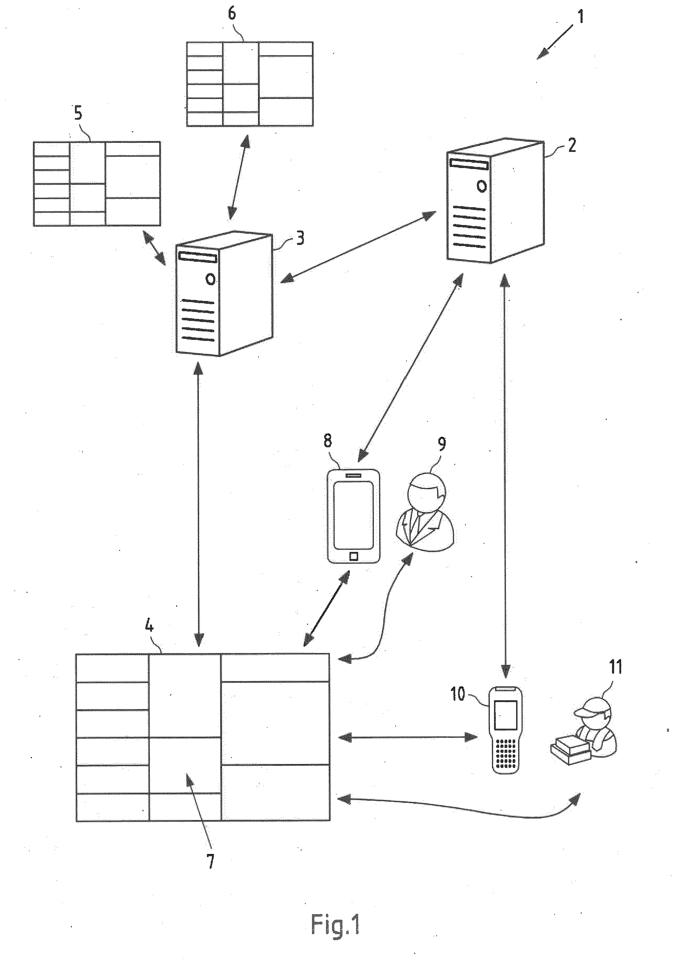

Fig. 1 zeigt eine schematische Darstellung einer beispielhaften Ausführungsform eines Systems gemäß der vorliegenden Erfindung.

Das System 1 umfasst eine Fachanlage 4 mit einer Mehrzahl von Fächern, von denen beispielhaft ein Fach in Fig. 1 mit Bezugszeichen 7 versehen ist. Jedes der Fächer der Fachanlage 4 ist zur Aufnahme einer oder mehrerer Sendungen vorgesehen. Jedes Fach ist im Grundzustand verriegelt bzw. geschlossen und kann anweisungsgesteuert und individuell durch beispielsweise eine in der Fachanlage 4 vorgesehene Schlosssteuereinheit elektrisch entriegelt bzw. geöffnet werden. Ein Beispiel einer derartigen Fachanlage 4 ist eine Fachanlage 4 gemäß dem bekannten Packstation-Konzept der Anmelderin.

Ein Zugang zu einem Fach 7 der Fachanlage 4 kann dabei aus verschiedenen Gründen erfolgen. Ein Beispiel ist die Zustellung oder Abholung einer Sendung durch einen Benutzer der Fachanlage. Dabei kann es sich bei dem Benutzer beispielsweise um einen Lieferanten oder Paketzusteller 11 handeln. Es kann sich bei dem Benutzer aber beispielsweise auch um eine andere Person, z.B. einen Empfänger 9, handeln. Beispielhaft kann auch ein autonomes Fahrzeug, ein Roboter, eine Drohne oder eine andere Vorrichtungen ein Benutzer der Fachanlage 4 sein.

Damit der Benutzer 9, 11 Zugang zu einem Fach 7 der Fachanlage 4 erhalten kann, ist es beispielsweise erforderlich, dass er gegenüber der Fachanlage 4 die Kenntnis oder den Besitz einer Information nachweist, die zum Zugang zu dem Fach 7 der Fachanlage 4 berechtigt. Eine Art der Information, die zum Zugang zu einem Fach 7 der Fachanlage 4 berechtigen kann, wird im Folgenden auch als "zweite Information" bezeichnet. Die Fachanlage 4 wiederum muss in der Lage sein, festzustellen, ob eine erhaltene oder erfasste zweite Information zum Zugang zu einem oder mehreren Fächern 7 der Fachanlage 4 berechtigt. Die dafür benötigten Informationen können beispielsweise wie nachfolgend beschrieben bestimmt und an die Fachanlage 4 übermittelt werden.

Zunächst kann eine erste Vorrichtung, die in dieser beispielhaften Ausführungsform ein Server 2 ist, eine zweite Information bestimmen. Dabei soll diese zweite Information zum Zugang zu einem Fach 7 der Fachanlage 4 berechtigen, beispielsweise wenn sie von einem Benutzer 9, 11 an die Fachanlage 4 übermittelt oder für sie bereitgestellt wird. Die zweite Information ist daher mit diesem Fach 7 der Fachanlage 4 assoziiert und wird beispielhaft derart auf dem Server 2 gespeichert, dass nachvollziehbar bleibt, mit welchem Fach 7 welcher Fachanlage 4 die zweite Information assoziiert ist.

Der Server 2 bestimmt dabei beispielhaft die zweite Information zufällig, um die Sicherheit des Systems 1 zu erhöhen. In anderen Ausführungsformen kann er aber beispielsweise die zweite Information stattdessen nach einem vorbestimmten Muster oder in Reaktion auf eine Benutzereingabe bestimmen.

Der Server 2 wird in diesem Ausführungsbeispiel beispielhaft von einer ersten Organisation, z.B. einem Lieferservice, einem Online-Händler, etc.), beispielsweise einem Unternehmen, kontrolliert. Die Organisation hat beispielsweise für einen ihrer Kunden eine Sendung in einem Fach 7 der Fachanlage 4 deponiert. Nun will sie beispielhaft dem Kunden, z.B. dem Benutzer 9, ermöglichen, die Sendung aus dem Fach 7 der Fachanlage 4 abzuholen. Der Server 2 gibt dazu die zweite Information beispielhaft über eine Internetverbindung an eine Vorrichtung (zuvor auch als "dritte Vorrichtung" bezeichnet) des Benutzers 9 aus. In diesem Ausführungsbeispiel handelt es sich bei der "dritten Vorrichtung" beispielhaft um ein Smartphone 8. In anderen Ausführungsformen kann die Ausgabe vom Server 2 auch anders erfolgen, beispielsweise indem ein Display die zweite Information des Servers 2 anzeigt und das Smartphone 8 oder eine andere Ausführungsform der "dritten Vorrichtung" die zweite Information erfasst.

Nachdem der Benutzer 9 bzw. sein Smartphone 8 die zweite Information vom Server 2 erhalten hat, kann er die zweite Information an die Fachanlage 4 übermitteln oder der Fachanlage 4 bereitstellen. Diese Übermittlung oder dieses Bereitstellen kann auf verschiedene Arten erfolgen.

In manchen Ausführungsformen ist die Fachanlage 4 mit einer oder mehreren Kommunikationsschnittstelle(n) ausgerüstet, die beispielsweise eine Schnittstelle zur drahtlosen Kommunikation mit einer oder mehreren der mobilen Vorrichtungen 8, 10 umfasst/umfassen. Die drahtlose Kommunikationsverbindung basiert dabei beispielsweise auf optischer Übertragung und/oder beruht auf elektrischen, magnetischen oder elektromagnetischen Signalen oder Feldern. Es kann sich bei der drahtlosen Kommunikationsverbindung insbesondere um eine Nahbereichs-Kommunikationsverbindung z.B. beruhend auf Bluetooth, WLAN, ZigBee, NFC und/oder RFID handeln. In einer beispielhaften Ausführungsform zeigt das Smartphone 8 die zweite Information als QR-Code an. Die Fachanlage 4 kann diesen QR-Code dann erfassen.

In anderen Ausführungsformen umfasst die Fachanlage 4 aber beispielsweise keine Schnittstelle zur drahtlosen Kommunikation mit einer mobilen Vorrichtung 8, 10 oder eine solche Schnittstelle ist, beispielsweise grundsätzlich oder nur in bestimmten Situationen, nicht nutzbar oder wird nicht genutzt, obwohl sie grundsätzlich nutzbar wäre. Beispielsweise kann dann eine Übermittlung oder Bereitstellung einer zweiten Information, die auf einer mobilen Vorrichtung 8, 10 vorhanden ist und dort beispielsweise angezeigt wird, mittels eines Benutzers 9, 11 erfolgen. Der Benutzer 9, 11 gibt die zweite Information dann beispielsweise über eine Eingabeeinheit oder Benutzerschnittstelle (z.B. eine Tastatur oder einen berührungsempfindlichen Bildschirm mit Bildschirmtastatur oder ein Spracherkennungsmodul) an der Fachanlage 4 ein und übermittelt somit die zweite Information. Die Fachanlage 4 kann die zweite Information also auf diese Weise erhalten. Dabei kann beispielsweise eine kurze Übermittlungszeit erreicht werden, wenn die Information kurz ist. Dies kann beispielsweise besonders vorteilhaft sein, wenn die Übermittlung innerhalb einer vorbestimmten, z.B. kurzen, Zeit erfolgen muss, beispielsweise um ein besonders hohes Sicherheitsniveau zu erreichen, z.B. weil eine Information zur Autorisierung nur eine begrenzte zeitliche Gültigkeit besitzen.

Nachdem die Fachanlage 4 die zweite Information erhalten oder erfasst hat, kann sie feststellen, ob die zweite Information zum Zugang zu einem oder mehreren Fächern 7 der Fachanlage 4 berechtigt. Da die zweite Information allerdings nicht von der Fachanlage 4 erstellt wurde und ihr somit im Allgemeinen auch nicht bekannt ist, benötigt sie zum Überprüfen einer zweiten Information weitere Informationen.

Deshalb ist die Fachanlage 4 beispielsweise zur Kommunikation mit dem auch als "Broker" bezeichneten Server 3 eingerichtet. Sie verfügt also beispielsweise über eine Kommunikationsschnittstelle, die einen Zugang zum Internet oder zu einem anderen Netz, an das der Broker 3 angeschlossen ist, ermöglicht. Die Fachanlage 4 ist also beispielsweise zur Fern-Kommunikation eingerichtet, weist also beispielsweise eine Schnittstelle zu einem zellularen Mobilfunksystem, eine DSL-Schnittstelle oder eine Local Area Network (LAN)-Schnittstelle auf, mittels der sie mit dem Broker 3 kommunizieren kann.

Der Broker 3 ist eine beispielhafte Ausführungsform der zuvor genannten "zweiten Vorrichtung". Er ist beispielsweise dazu eingerichtet, eine Vielzahl von Fachanlagen 4, 5, 6 zu verwalten und/oder mit diesen zu kommunizieren. Er wird dabei beispielsweise von einer zweiten Organisation kontrolliert, beispielsweise einem zweiten Unternehmen, beispielsweise der Anmelderin. Dadurch gehört der Broker 3 beispielsweise einem anderen technischen Unternehmensnetzwerk an als der Server 2. Daher können der Server 2 und der Broker 3 beispielsweise über das Internet miteinander kommunizieren, aber nicht ohne Weiteres auf die Daten des jeweils anderen zugreifen. In anderen Ausführungsformen können der Server 2 und der Broker 3 aber auch unter der Kontrolle der gleichen Organisation stehen und trotzdem jeweils gesondert abgesichert sein, sodass sie nicht ohne Weiteres auf die Daten des jeweils anderen zugreifen können. Das kann beispielsweise der Sicherheit zuträglich sein, wenn der Server 2 und der Broker 3 unterschiedliche Datensätze verwalten und/oder unterschiedliche Funktionen haben.

Vor dem Hintergrund, dass der Server 2 und der Broker 3 beispielhaft jeweils unterschiedlichen Netzwerken angehören, ist es in dieser beispielhaften Ausführungsform auch so, dass der Server 2 nicht mit der Fachanlage 4 kommunizieren kann. Das Fehlen einer Kommunikationsverbindung kann dabei beispielsweise darauf beruhen, dass der Server 2 nicht weiß, wie er die Fachanlage 4 erreichen kann, also beispielsweise die IP-Adresse nicht kennt. Es kann aber beispielsweise auch darauf beruhen, dass der Server 2 sich nicht gegenüber der Fachanlage 4 als berechtigter Kommunikationspartner authentisieren kann. Die weiteren Informationen, die die die Fachanlage 4 benötigt, um feststellen zu können, ob die zweite Information zum Zugang zu einem oder mehreren Fächern 7 der Fachanlage 4 berechtigt (d.h. eine erste Information und ein Hashwert), stammen also beispielsweise ursprünglich von dem Server 2. Die Fachanlage 4 erhält sie aber beispielhaft vom Broker 3, weil der Broker 3 mit ihr kommunizieren kann, nicht aber der Server 2.

Nicht nur, aber insbesondere in der beispielhaften Situation, wenn der Server 2 und der Broker 3 unterschiedlichen technischen Netzwerken angehören, kann es die Sicherheit des Systems 1 erhöhen, wenn nicht beide Vorrichtungen 2, 3 die zweite Information im Klartext verarbeiten. Der Server 2 übermittelt die zweite Information daher beispielsweise nicht an den Broker 3. Stattdessen bestimmt der Server 2 einen Hashwert basierend zumindest auf der zweiten Information und einer ersten Information. Dabei ist der Hashwert beispielhaft ein Ausgabewert eines Hashalgorithmus und zumindest die erste Information und die zweite Information sind Eingabewerte des Hashalgorithmus. Insbesondere ist die erste Information in diesem Ausführungsbeispiel ein Salz für den Hashalgorithmus. Die erste Information wird dabei beispielhaft von dem Server 2 bestimmt, z.B. zufällig oder basierend auf einer Benutzereingabe. Zudem hält der Server 2 in der hier beschriebenen beispielhaften Ausführungsform die erste Information, d.h. das Salz, in einem vorbestimmten Zeitraum konstant. Beispielhaft nutzt der Server 2 eine Woche lang das gleiche Salz, wenn er den Hashalgorithmus im Rahmen des beschriebenen Verfahrens verwendet. Falls der Server 2 in diesem Zeitraum eine Vielzahl von zweiten Informationen bestimmt, um Benutzern 9, 11 den Zugang zu einem Fach 7 der Fachanlage 4 zu ermöglichen, bestimmt er also eine Vielzahl von Hashwerten basierend auf jeweils unterschiedlichen zweiten Informationen und basierend auf der gleichen ersten Information. Die erste Information ist beispielhaft auf diese Weise mit dem Server 2 assoziiert. In anderen Ausführungsformen kann die erste Information aber beispielsweise auch derart mit dem Server 2 assoziiert sein, dass die erste Information mit der ersten Organisation assoziiert ist, die den Server 2 kontrolliert.

Den bestimmten Hashwert und die erste Information gibt der Server 2 an den Broker 3 aus. In manchen Ausführungsformen kann der Server 2 zudem weitere Informationen an den Broker 3 ausgeben, die dem bestimmten Hashwert und die erste Information zuordenbar sind. Solche weiteren Informationen können beispielsweise Informationen darüber sein, mit welchem Fach 7 von welcher Fachanlage 4 der Hashwert assoziiert ist.

Nachdem der Broker 3 die erste Information und den Hashwert erhalten hat, bestimmt der Broker 3 beispielhaft, an welche Fachanlage 4 er die erste Information und den Hashwert ausgeben soll. Anschließend gibt er die erste Information und den Hashwert an diese Fachanlage 4 aus. Die Fachanlage 4 erhält somit den Hashwert und die ersten Information vom Broker 3 und ist somit in der Lage festzustellen, basierend zumindest auf der ersten Information und dem Hashwert, ob die zweite Information zum Zugang zu einem oder mehreren Fächern 7 der Fachanlage 4 berechtigt.

Zum Feststellen, ob die zweite Information zum Zugang zu einem oder mehreren Fächern 7 der Fachanlage 4 berechtigt, bestimmt die Fachanlage 4 in der hier beschriebenen beispielhaften Ausführungsform einen Prüfhashwert, wobei der Prüfhashwert zumindest auf der ersten Information, die die Fachanlage 4 vom Broker 3 erhalten hat, und der zweiten Information, die die Fachanlage 4 vom Smartphone 8 oder Benutzer 9 erhalten oder erfasst hat, basiert. Dazu nutzt sie den gleichen Hashalgorithmus, den auch der Server 2 beim Bestimmen des Hashwertes verwendet hat. Die Konfiguration des Hashalgorithmus kann die Fachanlage 4 dabei beispielsweise ebenfalls vom Broker 3 erhalten haben, der sie wiederum vom Server 2 erhalten hat.

Nachdem die Fachanlage 4 den Prüfhashwert bestimmt hat, vergleicht sie ihn mit einem oder mehreren Hashwerten einer Vielzahl von Hashwerten, die jeweils mit einem Fach 7 der Fachanlage 4 assoziiert sind. Durch das Vergleichen des Prüfhashwerts mit einem oder mehreren Hashwerten der Vielzahl von Hashwerten oder unter Verwendung des Vergleichens des Prüfhashwerts mit einem oder mehreren Hashwerten der Vielzahl von Hashwerten stellt sie dann fest, zu welchem Fach 7 der Fachanlage 4 oder zu welchen Fächern 7 der Fachanlage 4 die zweite Information zum Zugang berechtigt.

Hat die Fachanlage 4 festgestellt, basierend zumindest auf der ersten Information und dem Hashwert, dass die zweite Information zum Zugang zu einem oder mehreren Fächern 7 der Fachanlage 4 berechtigt, gewährt sie in der vorliegenden beispielhaften Ausführungsform den Zugang zu dem Fach 7. Zudem speichert sie in der vorliegenden beispielhaften Ausführungsform die zweite Information ab. Die Speicherung der zweiten Information kann dabei als Nachweis insbesondere gegenüber dem Server 2 dienen. Denn mit der zweiten Information kann die Fachanlage 4 zeigen, dass der Zugang zum Fach 7 gewährt wurde, weil die zweite Information im Klartext erhalten wurde.

Vorteilhaft wirkt sich beim zuvor beschrieben Vergleichen eines Prüfhashwerts mit einem oder mehreren Hashwerten einer Vielzahl von Hashwerten, die jeweils mit einem Fach 7 der Fachanlage 4 assoziiert sind, aus, dass der Server 2 das gleiche Salz über einen vorbestimmten Zeitraum verwendet und nicht für jeden Hashwert ein neues Salz nutzt. Damit reduziert sich die Anzahl der Prüfhashwerte, die von der Fachanlage 4 für das Vergleichen bestimmt werden müssen. Die Rechenzeit an der Fachanlage 4 für die Bestimmung von Prüfhashwerten wächst somit nicht linear zur Anzahl der Fächer 7 an, für die die Fachanlage 4 Hashwerte erhalten hat, die von dem Server 2 stammen. Stattdessen reicht eine einzelne zeitaufwendige Prüfhashwertbestimmung für eine zweite Information, um den Prüfhashwert mit den Hashwerten für alle Fächer 7 zu vergleichen, die basierend auf dem gleichen Salz und mit der gleichen übrigen Konfiguration erzeugt wurden.

In manchen Ausführungsformen hat eine zweite Information nur eine vorbestimmte "Lebensdauer". Das heißt es gibt in solchen beispielhaften Ausführungsformen einen vorbestimmten Zeitraum, außerhalb dem die zweite Information nicht zum Zugang zu einem Fach 7 der Fachanlage 4 berechtigt. Wenn dieser Zeitraum länger ist als der Zeitraum, in dem der Server 2 das gleiche Salz verwendet, kann es zu folgender Situation kommen. In der Fachanlage 4 können dann zwei verschiedene erste Informationen gespeichert sein, die beide jeweils mit dem Server 2 assoziiert sind. In einem solchen Fall müssen dann zwar von der Fachanlage für eine zweite Information regelmäßig zwei Prüfhashwerte bestimmt werden, einer pro erster Information. Nichtsdestotrotz muss für eine größere Anzahl von Hashwerten, die vom Server 2 stammen, nicht für jede Kombination von erster Information und zweiter Information ein Prüfhashwert bestimmt werden.

### Beispielhafte Ausführungsform eines Verfahrens gemäß dem ersten Aspekt der Erfindung

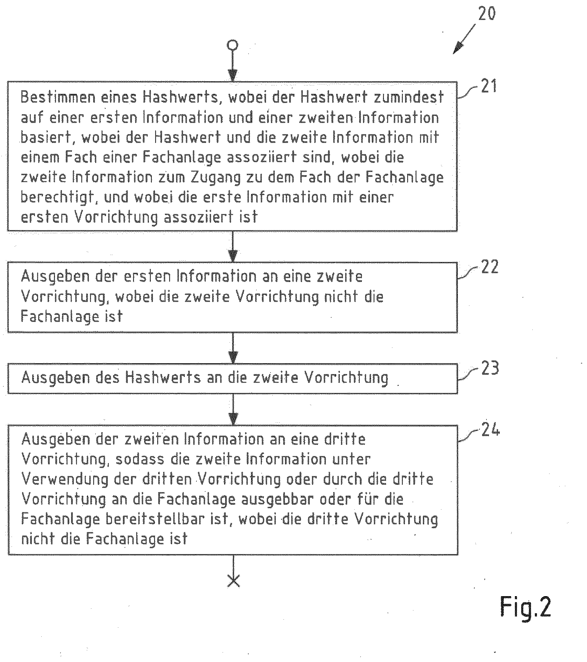

Fig. 2 zeigt ein Flussdiagramm 20 einer beispielhaften Ausführungsform eines Verfahrens gemäß dem ersten Aspekt der vorliegenden Erfindung, beispielsweise ausgeführt und/oder gesteuert von einer Vorrichtung, z.B. einem Server. Der Server ist dabei beispielsweise der Server 2 aus dem System 1.

Die beispielhafte Ausführungsform des Verfahrens gemäß dem ersten Aspekt der vorliegenden Erfindung, die in Flussdiagramm 20 gezeigt ist, kann aber beispielsweise auch von einem Handscanner 10 eines Lieferanten 11 durchgeführt werden. Das kann insbesondere dann auftreten, wenn ein Lieferant 11 eine Sendung nicht an der Adresse eines Empfängers 9 zustellen konnte und die Sendung nun in ein Fach 7 einer Fachanlage 4 einstellen möchte.

In Schritt 21 wird ein Hashwert bestimmt, wobei der Hashwert zumindest auf einer ersten Information und einer zweiten Information basiert, wobei der Hashwert und die zweite Information mit einem Fach 7 einer Fachanlage 4 assoziiert sind, wobei die zweite Information zum Zugang zu dem Fach 7 der Fachanlage 4 berechtigt, und wobei die erste Information mit der ersten Vorrichtung assoziiert ist. Im vorliegenden Ausführungsbeispiel wird der Schritt 21 beispielhaft in Reaktion auf eine Benutzereingabe ausgeführt. Die Benutzereingabe kann dabei beispielhaft von einem Benutzer erfolgen, der einer anderen Person, z.B. dem Lieferanten 11 oder dem Empfänger 9, Zugang zu einem Fach 7 einer Fachanlage 4 ermöglichen will.

In Schritt 22 wird die erste Information an eine zweite Vorrichtung ausgegeben, wobei die zweite Vorrichtung nicht die Fachanlage ist. Die Ausgabe kann beispielsweise nach Schritt 21 oder in Reaktion auf Schritt 21 erfolgen. Handelt es sich um eine Ausführungsform, bei der der Server 2 in einem vorbestimmten Zeitraum eine Vielzahl von Hashwerten zumindest basierend auf der ersten Information bestimmt, kann die Ausgabe gemäß Schritt 22 aber beispielsweise auch nur einmal im vorbestimmten Zeitraum erfolgen. Die Ausgabe kann dabei auch eine Information umfassen, die anzeigt, für wie lange die erste Information vom Server 2 verwendet wird, sodass in diesem Zeitraum keine neuen ersten Informationen vom Server 2 zu erwarten sind.

In Schritt 23 wird der Hashwert an die zweite Vorrichtung ausgegeben. Die Ausgabe kann zusammen mit der ersten Information erfolgen, beispielsweise in einem Nachrichtenformat das eines oder mehrerer der folgenden Felder enthält: eine Befehlskennung, eine Versions-ID, eine eindeutige Kennung der Organisation, die den Server 2 kontrolliert, eine eindeutige ID einer Fachanlage 4 und eines Fachs 7, den Hashwert mit zugehöriger Parametereinstellung und zugehöriger erste Information, einen Zähler, ein Gültigkeitsende, z.B. in UTC-Format und/oder eine Signatur über alle vorherigen Informationen. Die Ausgabe des Hashwerts kann aber auch separat von der Ausgabe der ersten Information erfolgen.

In Schritt 24 wird die zweite Information an eine dritte Vorrichtung ausgegeben, sodass die zweite Information unter Verwendung der dritten Vorrichtung oder durch die dritte Vorrichtung an die Fachanlage 4 ausgebbar oder für die Fachanlage 4 bereitstellbar ist, wobei die dritte Vorrichtung nicht die Fachanlage 4 ist. Die erste Information wird also z.B. an das Smartphone 8 eines Empfängers 9 oder an einen Handscanner 10 eines Lieferanten 11 ausgegeben. Das Smartphone 8 oder der Handscanner 10 können dann beispielsweise die zweite Information an die Fachanlage 4 übermitteln, z.B. per Bluetooth. Zusätzlich oder alternativ können sie die zweite Information der Fachanlage 4 bereitstellen, z.B. als QR-Code auf einer jeweiligen Anzeigeeinheit. Insbesondere die Schritte 22, 23 und 24 können ohne Weiteres in einer anderen Reihenfolge durchgeführt werden. Werden mehrere Hashwerte jeweils gemäß Schritt 21 bestimmt, ist Schritt 22 nicht für jeden bestimmten Hashwert erforderlich, insbesondere wenn sich die erste Information nicht geändert hat.

### Beispielhafte Ausführungsform eines Verfahrens gemäß dem zweiten Aspekt der Erfindung

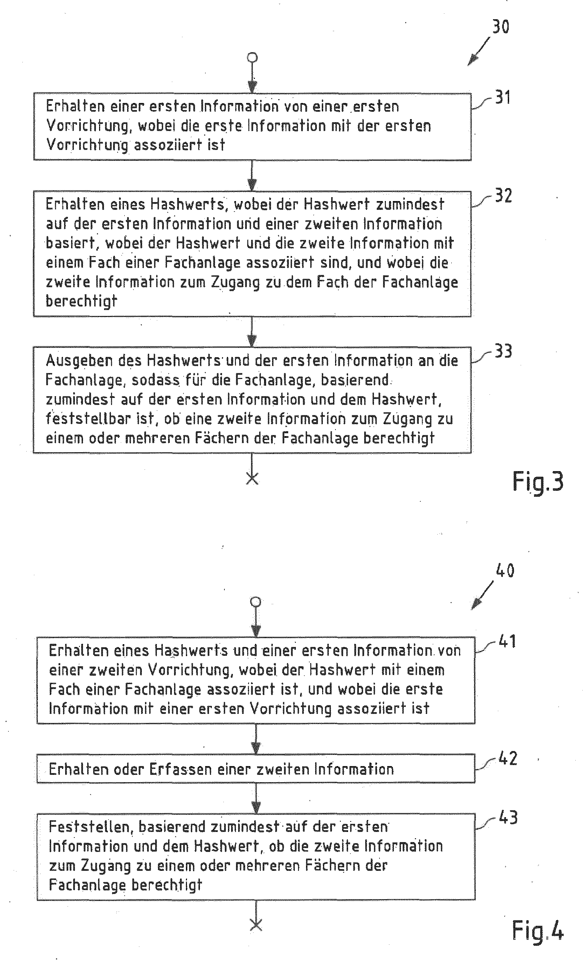

Fig. 3 zeigt ein Flussdiagramm 30 einer beispielhaften Ausführungsform eines Verfahrens gemäß dem zweiten Aspekt der vorliegenden Erfindung, beispielsweise ausgeführt und/oder gesteuert von einer Vorrichtung, z.B. einem Broker 3 wie im System 1.

In Schritt 31 wird eine erste Information von einer ersten Vorrichtung erhalten, wobei die erste Information mit der ersten Vorrichtung assoziiert ist.

In Schritt 32 wird ein Hashwert erhalten, wobei der Hashwert zumindest auf der ersten Information und einer zweiten Information basiert, wobei der Hashwert und die zweite Information mit einem Fach 7 einer Fachanlage 4 assoziiert sind, und wobei die zweite Information zum Zugang zu dem Fach 7 der Fachanlage 4 berechtigt. Dabei wird beispielsweise zusätzlich eine Information erhalten, die feststellbar macht, mit welcher Fachanlage 4 der Hashwert assoziiert ist. Insbesondere kann das Nachrichtenformat, mit dem die erste Information und/oder der Hashwert erhalten wird, beispielsweise so sein, wie zu Schritt 23 des Flussdiagramms 20 beschrieben.

In Schritt 33 wird der Hashwert und die erste Information an die Fachanlage 4 ausgegeben, sodass für die Fachanlage 4, basierend zumindest auf der ersten Information und dem Hashwert, feststellbar ist, ob eine zweite Information zum Zugang zu einem oder mehreren Fächern 7 der Fachanlage 4 berechtigt. Auch diese Ausgabe kann mit dem Nachrichtenformat erfolgen, das zu Schritt 23 beschrieben wird. Dabei muss allerdings das Nachrichtenformat in Schritt 22, 23 und/oder 31, 32 nicht identisch mit dem Nachrichtenformat dieses Schritt sein. Es kann aber teilweise oder vollständig dieselben Felder enthalten.

Werden eine Vielzahl von Hashwerten gemäß Schritt 32 erhalten, ist Schritt 31 nicht für jeden Hashwert erforderlich, insbesondere wenn Hashwerte der Vielzahl von Hashwerten auf der gleichen ersten Information basieren.

### Beispielhafte Ausführungsformen eines Verfahrens gemäß dem vierten Aspekt der Erfindung

Fig. 4 zeigt ein Flussdiagramm 40 einer beispielhaften Ausführungsform eines Verfahrens gemäß dem vierten Aspekt der vorliegenden Erfindung, beispielsweise ausgeführt und/oder gesteuert von einer Fachanlage 4.

In Schritt 41 wird ein Hashwert und eine erste Information von einer zweiten Vorrichtung erhalten, wobei der Hashwert mit einem Fach 7 der Fachanlage 4 assoziiert ist, und wobei die erste Information mit einer ersten Vorrichtung assoziiert ist. Der Erhalt korrespondiert zum Ausgeben des Hashwerts und der ersten Information in Schritt 33 des Flussdiagramms 30. Das Nachrichtenformat kann in beispielhaften Ausführungsformen daher dem Nachrichtenformat entsprechen, das zu Schritt 33 beschrieben wurde.

In Schritt 42 wird eine zweite Information erhalten oder erfasst. Dabei kann die zweite Information in manchen Ausführungsformen beispielsweise von der dritten Vorrichtung erhalten werden, beispielsweise über eine Nahfunkverbindung wie Bluetooth. In anderen Ausführungsformen kann die zweite Information erfasst werden, beispielsweise durch das Scannen eines optischen Musters wie z.B. einem Barcode oder einem QR-Code. In wieder anderen Ausführungsformen kann die zweite Information auch durch eine Benutzereingabe erfasst werden, beispielsweise an einem berührungsempfindlichen Bildschirm oder einer Tastatur an der Fachanlage 4. Das Erhalten oder Erfassen der zweiten Information kann beispielsweise zu beliebiger Zeit erfolgen, insbesondere beispielsweise zu einem beliebigen Zeitpunkt (z.B. 1 Sekunde, 1 Minute, 1 Stunde, 1 Tag, 1 Woche, 1 Monat, 1 Jahr) nachdem Schritt 41 ausgeführt wurde.

In Schritt 43 wird, basierend zumindest auf der ersten Information und dem Hashwert, festgestellt, ob die zweite Information zum Zugang zu einem oder mehreren Fächern 7 der Fachanlage 4 berechtigt. Dieser Schritt wird in beispielhaften Ausführungsformen in Reaktion auf Schritt 42 ausgeführt. In anderen beispielhaften Ausführungsformen kann der Schritt jedoch auch einen anderen Auslöser haben, beispielsweise eine Benutzereingabe, z.B. an der Fachanlage 4.

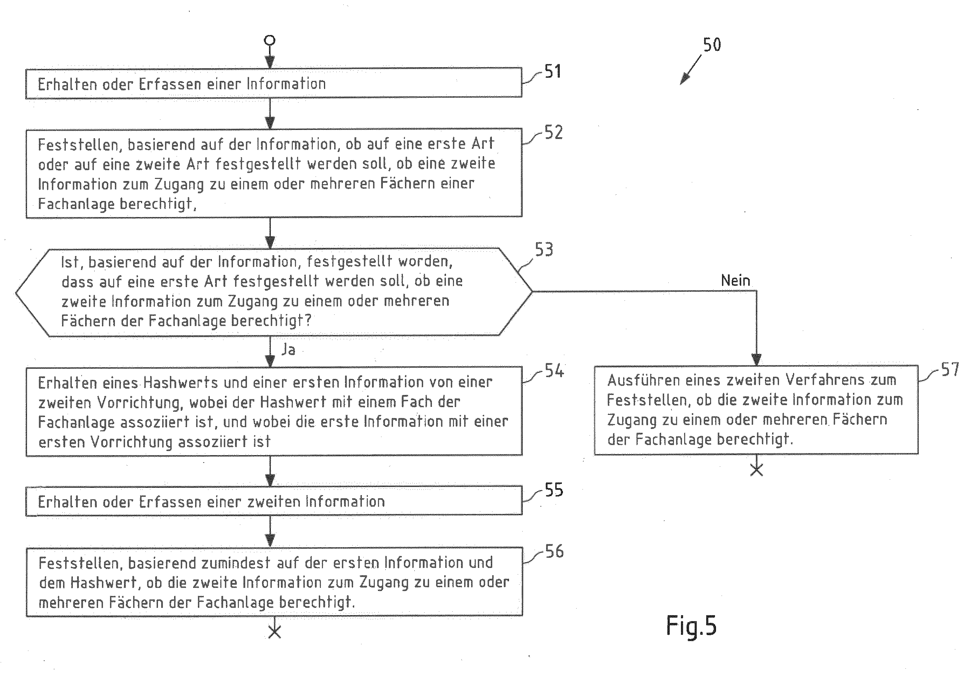

Fig. 5 zeigt ein Flussdiagramm 50 einer beispielhaften Ausführungsform eines Verfahrens, das das Verfahren gemäß dem vierten Aspekt der vorliegenden Erfindung beinhaltet, beispielsweise ausgeführt und/oder gesteuert von einer Fachanlage 4. In Schritt 51 wird eine Information erhalten oder erfasst. In der vorliegenden beispielhaften Ausführungsform handelt es sich dabei um einen einzelnen Buchstaben. Dieser Buchstabe wird beispielhaft zusammen mit weiteren Informationen erhalten und erfasst, insbesondere beispielsweise mit einer zweiten Information. In anderen Ausführungsformen kann die Information aber auch separat erhalten oder erfasst werden. Zudem kann die Information in anderen Ausführungsformen anders ausgeprägt sein, beispielsweise als eines oder mehrere alphanumerische Zeichen, als einzelnes Bit (Flag), als Bitfolge, als optisches Muster oder als akustisches Signal.

In Schritt 52 wird, basierend auf der Information, festgestellt, ob auf eine erste Art oder auf eine zweite Art festgestellt werden soll, ob eine zweite Information zum Zugang zu einem oder mehreren Fächern 7 der Fachanlage 4 berechtigt. Handelt es sich bei der Information beispielhaft um den Buchstaben "A", wird festgestellt, dass auf eine erste Art festgestellt werden soll, ob eine zweite Information zum Zugang zu einem oder mehreren Fächern 7 der Fachanlage 4 berechtigt. Handelt es sich bei der Information beispielhaft um den Buchstaben "B", wird festgestellt, dass auf eine zweite Art festgestellt werden soll, ob eine zweite Information zum Zugang zu einem oder mehreren Fächern 7 der Fachanlage 4 berechtigt. In manchen Ausführungsformen kann der Buchstabe beispielsweise weitere Werte annehmen und es kann weitere Arten geben, um festzustellen, ob eine zweite Information zum Zugang zu einem oder mehreren Fächern 7 einer Fachanlage 4 berechtigt.

Wenn in Schritt 53 festgestellt wurde, dass auf die erste Art festgestellt werden soll, ob die zweite Information zum Zugang zu einem oder mehreren Fächern 7 der Fachanlage 4 berechtigt, kann beispielsweise in den Schritten 54 bis 56 das im Flussdiagramm 40 beschriebene Verfahren ausgeführt werden. Das in Flussdiagramm 50 beschriebene Verfahren wird aber ausdrücklich auch unabhängig von dem im Flussdiagramm 40 beschriebenen Verfahren offenbart. Insbesondere können die Schritte 54 bis 56 dann durch ein anderes Verfahren zum Feststellen, ob die zweite Information zum Zugang zu einem oder mehreren Fächern 7 der Fachanlage 4 berechtigt, ersetzt werden. Dieses andere Verfahren kann dabei anders ausgeprägt sein, z.B. so wie es beispielhaft nachfolgend für das zweite Verfahren zum Feststellen, ob die zweite Information zum Zugang zu einem oder mehreren Fächern 7 der Fachanlage 4 berechtigt, beschrieben ist.

Wenn in Schritt 53 festgestellt wurde, dass auf die zweite Art festgestellt werden soll, ob die zweite Information zum Zugang zu einem oder mehreren Fächern 7 der Fachanlage 4 berechtigt, kann zudem gemäß Schritt 57 ein zweites Verfahren zum Feststellen, ob die zweite Information zum Zugang zu einem oder mehreren Fächern 7 der Fachanlage 4 berechtigt, ausgeführt werden. Dabei ist das zweite Verfahren zum Feststellen, ob die zweite Information zum Zugang zu einem oder mehreren Fächern 7 der Fachanlage 4 berechtigt, beispielhaft wissensbasiert. Dazu muss ein Benutzer beispielsweise eine Sicherheitsfrage beantworten können und/oder ein Passwort kennen. Die Antwort oder das Passwort sind dann beispielsweise die zweite Information. Zusätzlich oder alternativ kann das zweite Verfahren zum Feststellen, ob die zweite Information zum Zugang zu einem oder mehreren Fächern 7 der Fachanlage 4 berechtigt, in manchen Ausführungsformen besitzbasiert sein. Beispielsweise ist die zweite Information dann der Nachweis des Besitzes z.B. eines Schlüssels oder Ausweises. Letztlich kann das zweite Verfahren zum Feststellen, ob die zweite Information zum Zugang zu einem oder mehreren Fächern 7 der Fachanlage 4 berechtigt, in manchen Ausführungsformen zusätzlich oder alternativ biometriebasiert sein. Die zweite Information ist dann beispielsweise eine Information über die Gesichtsmerkmale eines Benutzers 9, 11 oder eine Information über einen Fingerabdruck.

In manchen Ausführungsformen erfolgt das zweite Verfahren zum Feststellen, ob die zweite Information zum Zugang zu einem oder mehreren Fächern 7 der Fachanlage 4 berechtigt, unter Verwendung von Daten, die einer Person 9, 11 oder einem Gerät 8, 10 zuordenbar sind. In einer Ausführungsform handelt es sich bei dem zweiten Verfahren z.B. um das eingangs beschriebene Authentifizierungskonzept mit einer Benutzerkennung und einem Öffnungs-Code.

Insgesamt ist bei dem Verfahren nach dem Flussdiagramm 50 vorteilhaft, dass verschiedene Arten der Authentisierung an der gleichen Fachanlage 4 möglich sind. So kann beispielsweise der Broker 3 Zugangsdaten für eine gegenüber dem Broker 3 registrierte Person 9, 11 oder ein gegenüber dem Broker 3 registriertes Gerät 8, 10 erzeugen, die zum Zugang zur Fachanlage berechtigen. Andererseits kann auch ein "externer" Server 2 Informationen (erste Information, zweite Information, Hashwert) erzeugen, die einen Zugang zur Fachanlage ermöglichen. Nichtsdestotrotz können beide Systeme separat und/oder unabhängig voneinander funktionieren. Das erhöht die Sicherheit und Flexibilität des gesamten Systems. Zudem sind in einem solchen Fall nicht alle Fächer 7 einer Fachanlage 4 betroffen, wenn entweder der Server 2 oder der Broker 3 von einem Angreifer kompromittiert wird.

### Beispielhafte Ausführungsform eines Verfahrens gemäß dem dritten Aspekt der Erfindung

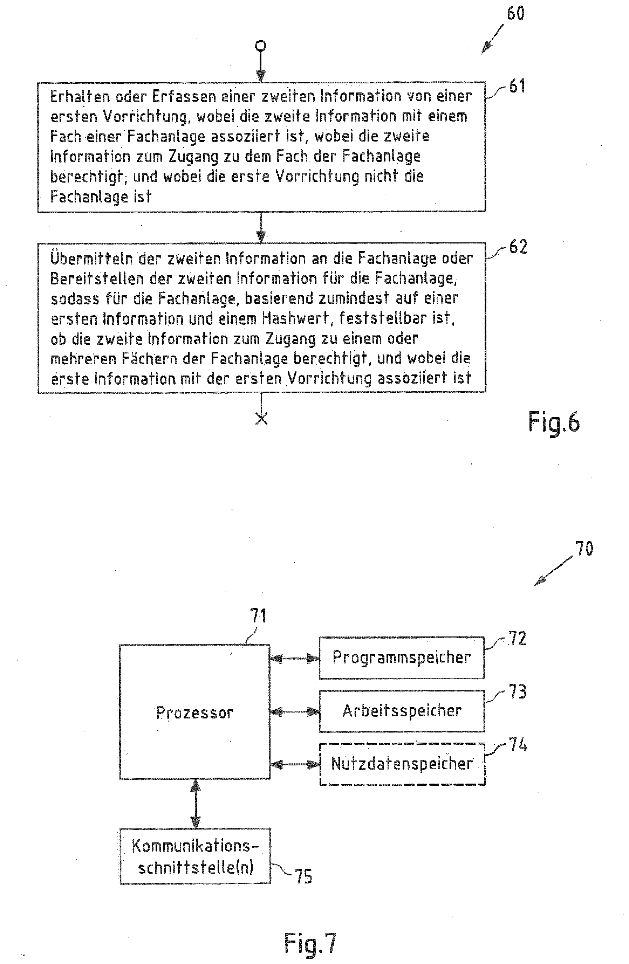

Fig. 6 zeigt ein Flussdiagramm 60 einer beispielhaften Ausführungsform eines Verfahrens gemäß dem dritten Aspekt der vorliegenden Erfindung, beispielsweise ausgeführt und/oder gesteuert von einer mobilen Vorrichtung. Die mobile Vorrichtung kann beispielsweise ein Smartphone 8 sein oder ein Handscanner 10 eines Lieferanten 11.

Schritt 61 umfasst das Erhalten oder Erfassen einer zweiten Information von einer ersten Vorrichtung, wobei die zweite Information mit einem Fach 7 einer Fachanlage 4 assoziiert ist, wobei die zweite Information zum Zugang zu dem Fach 7 der Fachanlage 4 berechtigt, und wobei die erste Vorrichtung nicht die Fachanlage 4 ist. In beispielhaften Ausführungsformen korrespondiert der Schritt 61 mit dem Schritt 24 des Flussdiagramms 20. Die zweite Information kann dabei beispielsweise zusammen mit weiteren Informationen erhalten werden, z.B. mit einer Information, die angibt, an welcher Fachanlage 4 die zweite Information zum Zugang zu einem Fach 7 der Fachanlage 4 berechtigt. Eine weitere Information kann beispielsweise auch sein, wie lange die zweite Information gültig ist, d.h. zum Zugang zu einem Fach 7 der Fachanlage 4 berechtigt. Nach dem Erhalten oder Erfassen der zweiten Information kann die zweite Information gespeichert werden, beispielsweise in einer App auf einem Smartphone 8.

In Schritt 62 wird die die zweite Information an die Fachanlage 4 übermittelt oder für die Fachanlage 4 bereitgestellt, sodass für die Fachanlage 4, basierend zumindest auf einer ersten Information und einem Hashwert, feststellbar ist, ob die zweite Information zum Zugang zu einem oder mehreren Fächern 7 der Fachanlage 4 berechtigt, wobei die erste Information mit der ersten Vorrichtung assoziiert ist. Der Schritt 62 korrespondiert in manchen Ausführungsformen mit dem Schritt 42 des Flussdiagramms 40 und in einer beispielhaften Ausführungsform auch mit dem Schritt 51 des Flussdiagramms 50. Die dort beschriebenen Möglichkeiten des Erfassens oder Erhaltens der zweiten Information gelten analog für das Übermitteln oder Bereitstellen der zweiten Information gemäß Schritt 62.

### Beispielhafte Ausführungsform einer Vorrichtung gemäß dem ersten oder zweiten Aspekt der Erfindung

Fig. 7 zeigt eine schematische Darstellung einer beispielhaften Ausführungsform einer Vorrichtung gemäß dem ersten oder zweiten Aspekt der Erfindung, beispielsweise einem Server 2 oder Broker 3.

Die Vorrichtung 70 umfasst einen Prozessor 71, einen Programmspeicher 72, einen Arbeitsspeicher 73, einen optionalen Nutzdatenspeicher 74 sowie eine oder mehrere Kommunikationsschnittelle(n) 75. Der Prozessor führt beispielsweise ein Programm gemäß dem ersten oder zweiten Aspekt der Erfindung aus, das in dem Programmspeicher 72 gespeichert ist, beispielsweise als Firmware. Der Arbeitsspeicher 73 dient insbesondere der Speicherung temporärer Daten während des Ablaufs des Programms.

Der Nutzdatenspeicher 74 dient der Speicherung von Daten, die bei der Abarbeitung des Programms erforderlich sind. Vorliegend kann es sich dabei beispielsweise um eine erste und/oder zweite Informationen und/oder Hashwerte handeln.

Bei einer beispielhaften Ausführungsform, in der es sich bei der Vorrichtung 70 um eine Vorrichtung, die das Verfahren gemäß dem ersten Aspekt der Erfindung ausführt, handelt, speichert die Vorrichtung 70 im Nutzdatenspeicher 74 ein oder mehrere "Trios" aus (jeweils) einer ersten Information, einer zweiten Information und einem Hashwert, der zumindest auf der (jeweiligen) ersten und der jeweiligen zweiten Information basiert. Die Speicherung eines solchen Trios ist dabei beispielsweise derart, dass die drei Bestandteile eines Trios einander zuordenbar sind. Einem solchen Trio zugeordnet kann außerdem beispielhaft eine Information gespeichert sein, die anzeigt, mit welchem Fach 7 der Hashwert und/oder die erste Information und/oder die zweite Information assoziiert sind. Darüber hinaus können weitere Informationen im Nutzdatenspeicher 74 gespeichert sein. Beispielsweise speichert die Vorrichtung 70 Daten zur Verwaltung von Fächern 7 einer oder mehrerer Fachanlagen 4, 5, 6, deren jeweiligen Inhalten, zu Benutzern wie Einstellern 11, Abholern 9 und Inspektoren, und/oder zur Kommunikation mit den Benutzern 9, 11.

Insbesondere in der hier beschriebenen beispielhaften Ausführungsform kann/können die Kommunikationsschnittstelle(n) 75 zumindest eine Schnittstelle zur Kommunikation mit anderen Einheiten des Systems 1 umfassen, insbesondere mit dem Broker 3, dem Smartphone 8, mittelbar mit dem Benutzer 9, dem Handscanner 10 und mittelbar mit dem Lieferanten 11. Diese Kommunikation kann beispielsweise auf dem Internet Protocol (IP) basieren. Beispielsweise ist dazu zumindest eine der Kommunikationsschnittstelle(n) 75 als Local Area Network (LAN) Schnittstelle ausgeführt. Die Kommunikationsverbindung kann aber auch ganz oder teilweise funkbasiert sein.

Bei einer beispielhaften Ausführungsform, in der es sich bei der Vorrichtung 70 um eine Vorrichtung, die das Verfahren gemäß dem zweiten Aspekt der Erfindung ausführt, handelt, speichert die Vorrichtung 70 im Nutzdatenspeicher 74 Hashwerte und jeweilige erste Informationen, auf denen die jeweiligen Hashwerte basieren. Der Nutzdatenspeicher 74 enthält zudem beispielsweise Informationen über eine Vielzahl von Fachanlagen 4, 5, 6 und z.B. Informationen darüber, wann und/oder wie die Vorrichtung 70 mit den Fachanlagen 4, 5, 6 kommunizieren kann. Das betrifft beispielsweise das Ausgeben eines Hashwertes und einer ersten Information. Die erhaltenen und auszugebenden Informationen und Hashwerte können aber beispielsweise auch nur im Arbeitsspeicher 73 zwischengespeichert werden. Eine beispielhafte Vorrichtung 70, die lediglich Daten weiterleitet, benötigt dann nicht unbedingt einen Nutzdatenspeicher 74.

In dieser beispielhaften Ausführungsform kann/können die Kommunikationsschnittstelle(n) 75 ebenfalls zumindest eine Schnittstelle zur Kommunikation mit anderen Einheiten des Systems 1 umfassen, insbesondere mit dem Server 2 und den Fachanlagen 4, 5, 6. Diese Kommunikation kann beispielsweise auf dem Internet Protocol (IP) basieren. Beispielsweise ist dazu zumindest eine der Kommunikationsschnittstelle(n) 75 als Local Area Network (LAN) Schnittstelle ausgeführt. Die Kommunikationsverbindung kann aber auch in diesem Ausführungsbeispiel ganz oder teilweise funkbasiert sein.

### Beispielhafte Ausführungsform einer Vorrichtung gemäß dem vierten Aspekt der Erfindung

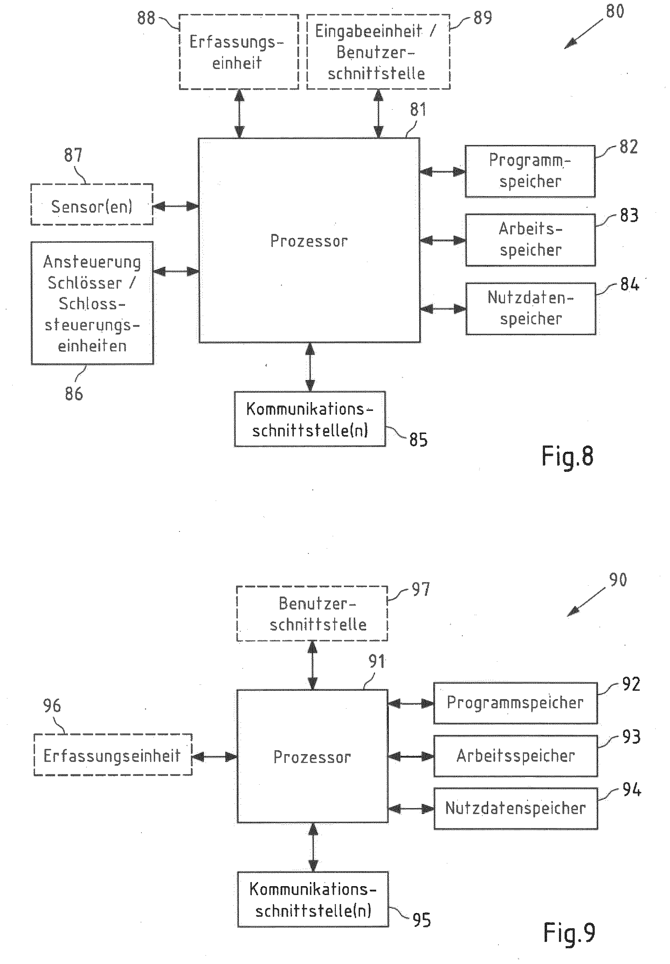

Fig. 8 zeigt eine schematische Darstellung einer beispielhaften Ausführungsform einer Vorrichtung gemäß dem vierten Aspekt der Erfindung, beispielsweise einer Fachanlage 4 oder deren Steuereinheit.

Die Vorrichtung 80 umfasst einen Prozessor 81, einen Programmspeicher 82, einen Arbeitsspeicher 83, einen Nutzdatenspeicher 84, eine oder mehrere Kommunikationsschnittelle(n) 85, eine Ansteuerungseinheit 86 für die Schlösser oder Schlosssteuereinheiten der Fächer 7 der Fachanlage 4, einen oder mehrere optionale Sensoren 87, eine optionale Erfassungseinheit 88 und eine optionale Eingabeeinheit/Benutzerschnittstelle 89. Der Prozessor 81 führt beispielsweise ein Programm gemäß dem vierten Aspekt der Erfindung aus, das in dem Programmspeicher 82 gespeichert ist, beispielsweise als Firmware. Arbeitsspeicher 83 dient insbesondere der Speicherung temporärer Daten während des Ablaufs dieses Programms.

Der Nutzdatenspeicher 84 dient der Speicherung von Daten, die bei der Abarbeitung des Programms erforderlich sind. Vorliegend kann es sich dabei beispielsweise um erhaltene erste Informationen und Hashwerte, die auf den jeweiligen ersten Informationen basieren, handeln. Auch weitere Daten wie beispielsweise zweite Informationen können im Nutzdatenspeicher 84 gespeichert werden, z.B. in Datenstrukturen, die auch eine Zuordnung von Hashwerten und/oder ersten Informationen und/oder zweiten Informationen zu jeweiligen Fächern 7 repräsentieren.

Die Kommunikationsschnittstelle(n) 85 umfasst/umfassen beispielsweise eine Schnittstelle zur drahtlosen Kommunikation mit den Vorrichtungen 8 und/oder 10, beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID (Radio Frequency Identification). Die Vorrichtung 80 ist beispielsweise ferner zur direkten Kommunikation mit der Vorrichtung 3 eingerichtet, verfügt also beispielsweise über eine Kommunikationsschnittstelle, die einen Zugang zum Internet oder zu einem anderen Netz, an das die Vorrichtung 3 angeschlossen ist, ermöglicht.

Die Ansteuerungseinheit 86 ermöglicht es, ein einzelnes Fach 7 der Fachanlage 4 gezielt zu öffnen oder zu entriegeln, um die Öffnung zu ermöglichen, insbesondere durch Ansteuerung des Schlosses des Fachs 7 oder einer Schlosssteuereinheit des Fachs 7. Zusätzlich oder alternativ kann die Verriegelung eines Fachs 7 bewirkt werden. Die Ansteuerungseinheit 86 ist beispielsweise über eine jeweilige Verdrahtung mit allen Schlössern oder Schlosssteuereinheiten der Fachanlage 4 verbunden oder an einen Bus angeschlossen, an dem auch alle Schlösser oder Schlosssteuereinheiten der Fachanlage 4 angebunden sind.

Die Sensoren 87 sind optional und beispielsweise fachspezifisch. Ein Sensor ermöglicht es beispielsweise zu detektieren, ob sich in einem jeweiligen Fach 7 eine jeweilige Sendung befindet und/oder ob in das Fach 7 eine Sendung eingestellt und/oder dem Fach 7 entnommen wird/wurde.

Die Erfassungseinheit 88 ist optional und in einer beispielhaften Ausführungsform ein Scanner, welcher optisch Informationen erfassen kann, z.B. einen Bar- oder QR-Code, z.B. von einem Bildschirm einer mobilen Vorrichtung 8, 10. Die Erfassungseinheit 88 kann zusätzlich oder alternativ in der Lage sein, akustische Signale zu erfassen und zu verarbeiten, also z.B. mittels Spracherkennung.

Die Eingabeeinheit/Benutzerschnittstelle 89 ist optional und zur Kommunikation mit einem Zusteller/Lieferanten 11 und/oder einem Benutzer 9 eingerichtet. Die Einrichtung kann dabei beispielsweise eine Ausgabeeinheit zum Anzeigen z.B. über einen Bildschirm oder über fachspezifische Leuchtanzeigen (z.B. zur Darstellung eines jeweiligen Zustands belegt/unbelegt) oder akustischen Ausgeben von Informationen und/oder eine Einheit zum Erhalten von Informationen und/oder Daten (z.B. eine Tastatur oder einen berührungsempfindlichen Bildschirm mit Bildschirmtastatur oder ein Spracherkennungsmodul) von den Personen umfassen.

### Beispielhafte Ausführungsform einer Vorrichtung gemäß dem dritten Aspekt der Erfindung

Fig. 9 zeigt eine schematische Darstellung einer beispielhaften Ausführungsform einer Vorrichtung gemäß dem dritten Aspekt der Erfindung, beispielsweise einer mobilen Vorrichtung. Die Vorrichtung 90 kann beispielsweise ein portables Scangerät eines Zustellers/Lieferanten darstellen (einen sog. Handscanner 10), also ein Gerät, das zur optischen Erfassung von Sendungs- oder Lieferungsdaten, insbesondere in Form von 2D- oder 3D-Barcodes, von der Sendung oder Lieferung eingerichtet ist. Wenn die Vorrichtung 90 das Gerät des Benutzers 9 repräsentiert, kann es sich dabei insbesondere um ein Smartphone 8 handeln, also insbesondere um ein Mobiltelefon mit der Fähigkeit, auch komplexere Programme, sog. Apps, selbstständig auszuführen.

Die Vorrichtung 90 umfasst einen Prozessor 91, einen Programmspeicher 92, einen Arbeitsspeicher 93, einen Nutzdatenspeicher 94, eine oder mehrere Kommunikationsschnittelle(n) 95, eine optionale Erfassungseinheit 96 zur Erfassung von Informationen und eine optionale Benutzerschnittstelle 97.

Der Prozessor 91 führt beispielsweise ein Programm gemäß dem dritten Aspekt der Erfindung aus, das in dem Programmspeicher 92 gespeichert ist, beispielsweise als App oder als Firmware. Arbeitsspeicher 93 dient insbesondere der Speicherung temporärer Daten während des Ablaufs des Programms.

Der Nutzdatenspeicher 94 dient der Speicherung von Daten, die bei der Abarbeitung des Programms erforderlich sind, beispielsweise einer oder mehrerer zweiter Informationen.

Die Kommunikationsschnittstelle(n) 95 umfassen eine oder mehrere Schnittstellen zur Kommunikation der Vorrichtung 90 mit der Vorrichtung 2. Die Schnittstelle kann beispielsweise auf IP beruhen, aber sich aufgrund der Portabilität der Vorrichtung 90 einer drahtlosen Übertragungstechnik als physikalischer Schicht bedienen, die beispielsweise auf zellularem Mobilfunk (z.B. GSM, E-GSM, UMTS, LTE, 5G) oder WLAN (Wireless Local Area Network) beruht. Die Kommunikationsschnittstelle(n) 95 umfassen optional ferner eine Schnittstelle zur Kommunikation mit der Fachanlage 4, beispielsweise basierend auf optischer Übertragung, Bluetooth oder NFC. Hier kann eine Übertragungstechnik mit verhältnismäßig geringer Reichweite, beispielsweise weniger als 100m oder 10m oder 5m ausreichend und ggf. sogar erwünscht sein, um ein Abhören der Übertragung durch Dritte zu erschweren.

Die Benutzerschnittstelle 97 kann als Bildschirm und Tastatur oder als berührungsempfindliche Anzeige (Touchscreen) ausgestaltet sein, ggf. mit zusätzlichen akustischen und/oder haptischen Signalgebungseinheiten. Die Anzeige einer zweiten Information über die Benutzerschnittstelle 97 kann eine gesonderte Schnittstelle 97 zur Kommunikation mit der Fachanlage 4 unnötig machen, wenn die zweite Information in eine Benutzerschnittstelle der Fachanlage 4 eingegeben werden kann (siehe Benutzerschnittstelle 89 der Fig. 8). Die Erfassungseinheit 96 zur Erfassung einer ersten Information und/oder eines Hashwerts (beispielsweise in Form einer optischen Scaneinheit) ist beispielsweise lediglich optional vorhanden.

### Beispielhafte Ausführungsform mehrerer Vorrichtungen und Verfahren gemäß verschiedenen Aspekten der Erfindung

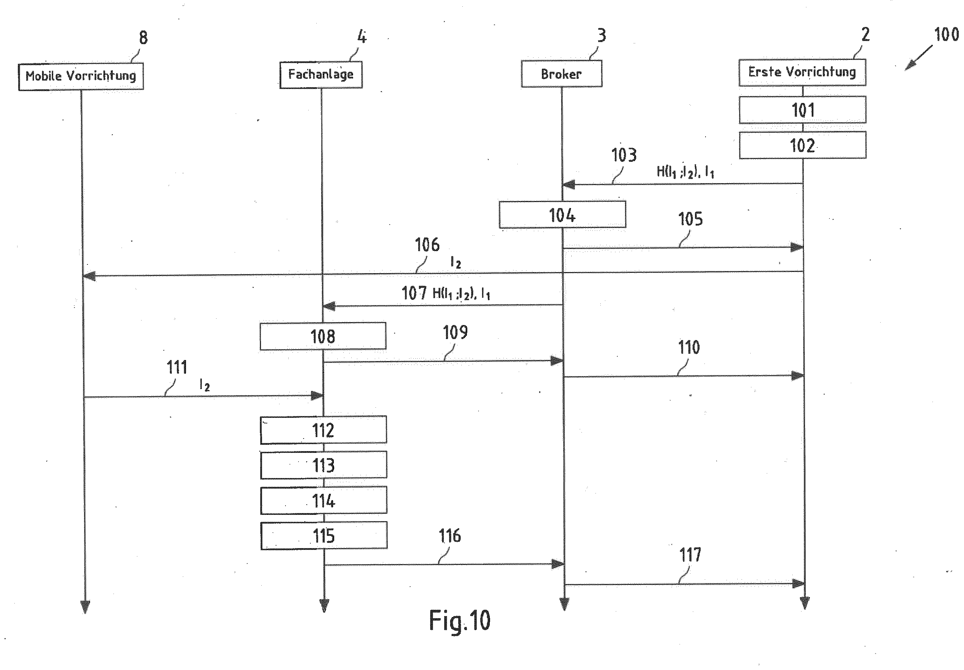

Fig. 10 zeigt eine schematische Darstellung 100 beispielhafter Datenübertragungen zwischen Vorrichtungen, insbesondere zwischen einer beispielhaften mobilen Vorrichtung, einem beispielhaften ersten Vorrichtung, einem beispielhaften Broker und einer beispielhaften Fachanlage, die jeweils beispielhafte Ausführungsformen von Verfahren gemäß einem jeweiligen Aspekt der Erfindung ausführen. Die erste Vorrichtung, die eine Ausführungsform des Verfahrens gemäß dem ersten Aspekt der Erfindung ausführt, kann beispielsweise der Server 2 sein. Der Broker 3 führt beispielhaft eine Ausführungsform des Verfahrens gemäß dem zweiten Aspekt der Erfindung aus. Die mobile Vorrichtung, die beispielhaft eine Ausführungsform des Verfahrens gemäß dem dritten Aspekt ausführt, kann beispielsweise das Smartphone 8 sein. Die Fachanlage 4 führt beispielhaft eine Ausführungsform des Verfahrens gemäß dem vierten Aspekt der Erfindung aus.

Schritt 101 umfasst die Verwaltung von Fächern einer Fachanlage 4 durch eine erste Vorrichtung 2. Dieser Schritt beinhaltet beispielsweise, dass die erste Vorrichtung 2 prüft, für welche Fächer von welchen Fachanlagen 4, 5, 6 sie zweite Informationen generieren kann, die zum Zugang berechtigen. Zudem prüft die erste Vorrichtung 2 beispielsweise, welche dieser Fächer noch unbelegt sind. Beispielhaft stellt sie fest, dass sie eine zweite Information, die zum Zugang zum Fach 7 der Fachanlage 4 berechtigt, bestimmen kann. Sie bestimmt daher zufällig eine zweite Information, die den Wert "12345678" hat.

In Schritt 102 bestimmt die erste Vorrichtung 2 einen Hashwert, der zumindest auf einer ersten Information I₁ und einer zweiten Information I₂ basiert, wobei der Hashwert und die zweite Information I₂ mit dem Fach 7 der Fachanlage 4 assoziiert sind, wobei die zweite Information I₂ zum Zugang zu dem Fach 7 der Fachanlage 4 berechtigt, und wobei die erste Information I₁ mit der ersten Vorrichtung 2 assoziiert ist. Der Hashwert wird im Folgenden als H(I₁;I₂) bezeichnet. Die erste Information I₁ ist in dieser beispielhaften Ausführungsform ein Salz für einen Hashalgorithmus mit dem Wert "Qbnemd8cX6a8Qx1r". Der Hashwert wird von der ersten Vorrichtung 2 mittels eines Hashalgorithmus der Argon2-Familie bestimmt und hat in diesem Ausführungsbeispiel beispielhaft den Wert "$argon2id$v=19$m=16,t=2,p=1$UWJuZW1k0GNYNmE4UXgxcg$KQRxIVr/ Xt34Lq/KZq+6dA".

In Schritt 103 wird der Hashwert H(I₁;I₂) und die erste Information I₁ von der ersten Vorrichtung 2 an den Broker 3 ausgegeben. Die Übertragung erfolgt dabei vertraulich und verbindlich, z.B. kanalverschlüsselt, mit einer asymmetrischen Signatur.

In Schritt 104 prüft der Broker 3 die Korrektheit der Verbindung, des vereinbarten Übertragungsformats und die Integrität der erhaltenen Informationen oder des erhaltenen Hashwerts. Dabei prüft er beispielhaft die Korrektheit der Verbindung durch TLS-Prüfung gegen ein gepinntes Zertifikat. Zudem prüft der Broker 3 die Integrität durch Plausibilisierung der Gültigkeitsdauer der erhaltenen Informationen oder des erhaltenen Hashwerts, eines zugehörigen erhaltenen Zählerwertes und einer Signatur. Darüber hinaus prüft er die Zulässigkeit der erhaltenen Information z.B. darauf, ob die erste Vorrichtung 2 tatsächlich berechtigt ist für das Fach 7 der Fachanlage 4 einen Hashwert und eine zweite Information zu bestimmen, die zum Zugang zu dem Fach 7 berechtigt. Außerdem kann der Broker 3 auch die Art der erhaltenen Nachricht prüfen.

Bei einem positiven Prüfungsergebnis sendet der Broker 3 in Schritt 105 eine Bestätigung an die erste Vorrichtung 2, andernfalls eine Fehlermeldung.

Erhält die erste Vorrichtung 2 in Schritt 105 eine Bestätigung, kann sie davon ausgehen, dass die Fachanlage 4 feststellen wird, dass die zweite Information I₂ zum Zugang zum Fach 7 der Fachanlage 4 berechtigt, wenn die Fachanlage 4 die zweite Information von einer mobilen Vorrichtung 8 erfasst oder erhält. Die erste Vorrichtung 2 sendet daher in Schritt 106 die zweite Information I₂ an die mobile Vorrichtung 8. Der Schritt 106 kann dabei in Reaktion auf den Erhalt der Bestätigung in Schritt 105 erfolgen. Er kann aber auch zeitlich losgelöst davon erfolgen, beispielsweise zu einem späteren Zeitpunkt in Reaktion auf eine Benutzereingabe. Insbesondere kann der Schritt 106 auch zeitlich unabhängig von einem oder mehreren der Schritte 106 bis 110 erfolgen, also auch nach einem oder mehreren dieser Schritte.

Waren alle durchgeführten Prüfungen in Schritt 104 positiv, gibt der Broker 3 zudem zumindest den Hashwert H(I₁;I₂) und die erste Information I₁ im Schritt 107 an die Fachanlage 4 aus.

In Schritt 108 prüft die Fachanlage 4 die Integrität und Zulässigkeit der erhaltenen Daten, zumindest umfassend den Hashwert H(I₁;I₂) und die erste Information I₁. Die Prüfung kann dabei teilweise oder vollständig so erfolgen, wie sie in Schritt 104 beschrieben wurde.

Wenn die Fachanlage 4 die erhaltenen Daten geprüft hat, erhält die erste Vorrichtung 2 über den Broker 3 in Schritt 110 asynchron eine Bestätigung (bei positiver Prüfung) oder eine Fehlermeldung (bei negativer Prüfung) nach Rückmeldung der Fachanlage 4 an den Broker in Schritt 109.

In Schritt 111 erhält oder erfasst die Fachanlage 4 die zweite Information I₂ von der mobilen Vorrichtung 8. Dieser Schritt kann beispielsweise zeitlich nach den Schritten 101 bis 108 erfolgen, z.B. innerhalb von 10 Tagen nach Schritt 106.

Beispielsweise in Reaktion auf den Erhalt der zweiten Information I₂ bestimmt die Fachanlage 4 in Schritt 112 einen Prüfhashwert, der zumindest auf der in Schritt 107 erhaltenen ersten Information I₁ und der in Schritt 111 erhaltenen oder erfassten zweiten Information I₂ basiert. Im Anschluss vergleicht sie den Prüfhashwert mit einem oder mehreren Hashwerten einer Vielzahl von Hashwerten, die sie gespeichert hat und die jeweils mit einem Fach der Fachanlage 4 assoziiert sind. Auf diese Weise stellt sie fest, dass der Prüfhashwert mit dem Hashwert H(I₁;I₂) übereinstimmt, der mit dem Fach 7 der Fachanlage 4 assoziiert ist. Damit hat die Fachanlage 4 festgestellt, dass die zweite Information zum Zugang zum Fach 7 berechtigt.

Nach dieser Feststellung gewährt die Fachanlage 4 in Schritt 113 Zugang zum Fach 7, z.B. indem sie das Fach 4 mittels einer Schlosssteuereinheit elektrisch entriegelt bzw. öffnet.

Ein Benutzer 9, 11 kann daraufhin eine Sendung in das Fach 7 einstellen, eine Sendung aus dem Fach 7 abholen oder kontrollieren, was der Inhalt des Fachs 7 ist. Anschließend kann der Benutzer 9,11 das Fach 7 wieder schließen. Die Fachanlage 4 detektiert das Schließen des Fachs 7 in Schritt 114.

In Schritt 115 protokolliert die Fachanlage 4 die in Schritt 111 erhaltene zweite Information I₂, zu der sie festgestellt hat, dass sie zum Zugang zum Fach 7 berechtigt.

Daraufhin gibt die Fachanlage 4 in Schritt 116 eine Bestätigung über den erfolgten Zugang an den Broker 3 aus. Der Broker 3 übermittelt diese Bestätigung oder einen Teil der Bestätigung im Schritt 117 dann an die erste Vorrichtung 2. Die erste Vorrichtung 2 kann daraufhin beispielsweise ihren internen Datenbestand zur Belegung von Fächern aktualisieren, den sie beispielsweise regelmäßig im Rahmen des Schritts 101 prüft.

### Beispielhafte Ausführungsform eines Systems

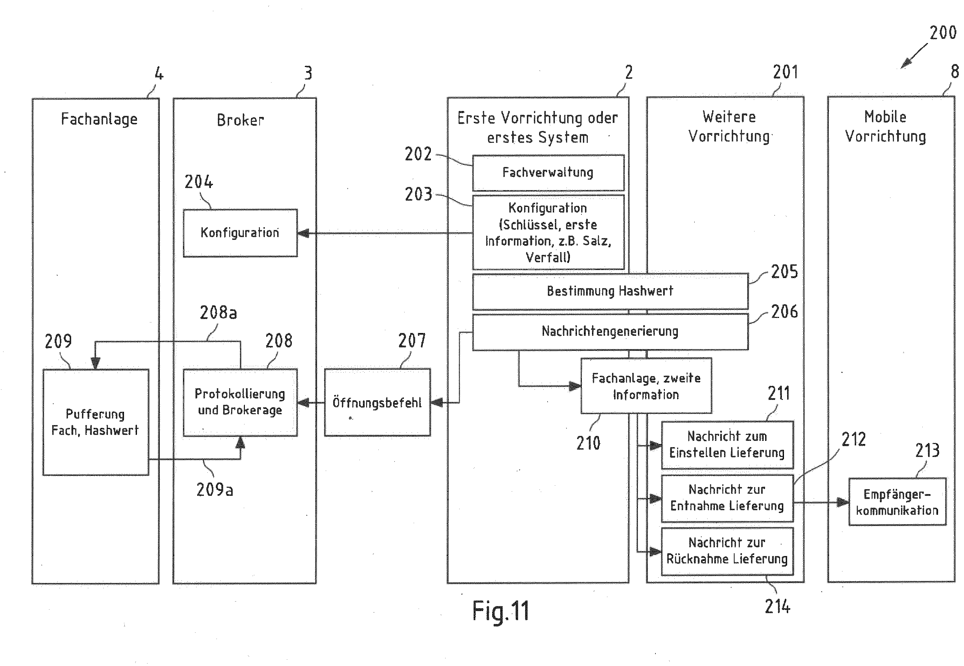

Fig. 11 zeigt eine schematische Darstellung einer beispielhaften Ausführungsform eines Systems 200 gemäß der vorliegenden Erfindung, beispielhaft umfassend eine Fachanlage 4, eine mobile Vorrichtung 8, einen Broker 3, eine erste Vorrichtung 2 oder ein erstes System, z.B. einen Server oder ein Serversystem, und eine weitere Vorrichtung 201. Insbesondere zeigt Fig. 11 beispielhaft, welche Aufgaben die verschiedenen Vorrichtungen 2, 3, 4, 8, 201 im System 200 haben.

Beispielsweise führt die Fachanlage 4 in manchen Ausführungsformen im Wesentlichen das Öffnen von einzelnen Fächern und die Rückmeldung des Fachstatus (geschlossen, geöffnet, defekt) durch. Dabei weiß die Fachanlage 4 beispielsweise nicht, welcher Benutzer an der Fachanlage 4 arbeitet und ob ein Fach 7 zur Befüllung oder zur Abholung geöffnet wird. Die Fachanlage 4 führt in diesem Kontext daher lediglich den Erhalt von Hashwerten, zugehörigen ersten Informationen und Informationen darüber, mit welchem Fach 7 der Fachanlage 4 ein Hashwert assoziiert ist, durch und puffert diese Informationen, wie in Block 209 dargestellt.

Der Broker 3 verwaltet beispielhaft als Master, welche ersten Vorrichtungen 2 für welche Fächer an welchen Fachanlagen zweite Informationen bereitstellen können, die zum Zugang zu einem jeweiligen Fach der jeweiligen Fachanlage berechtigen. Dazu empfängt er beispielsweise Öffnungsbefehle 207 von einer ersten Vorrichtung 2, die jeweils Informationen wie einen Hashwert, eine erste Information, eine Versionsnummer, eine Fachanlagenkennung, eine Fachkennung, ein Ablaufdatum, einen Zähler, eine Signatur und/oder eine ID einer Organisation, die die erste Vorrichtung 2 kontrolliert, umfassen. Der Broker 3 kann dann Teile der erhaltenen Informationen an jeweilige Fachanlagen verteilen 208a und erhält dafür beispielsweise jeweilige Bestätigungen 209a (insgesamt auch bezeichnet als "Brokerage").

Bei der Verteilung 208a können erste Informationen und Hashwerte für mehrere Zugangsvorgänge verknüpft werden. Beispielsweise können eine erste Information und ein Hashwert für einen Einsteller und ein weiterer Hashwert (und ggf. eine weitere erste Information) für einen Abholer zusammen übertragen werden. Sobald der Einsteller das Fach 7 geöffnet und wieder geschlossen hat, wird beispielsweise automatisch die erste Information und der Hashwert für den Abholer aktiv. Diese Art der gemeinsamen Übertragung von Informationen kann ermöglichen, dass die Fachanlage 4 die meisten Funktionen auch dann bereitstellen kann, wenn eine Netzverbindung nur sporadisch verfügbar ist.

Die Aktionen, die der Broker 3 ausführt, kann er ganz oder teilweise protokollieren 208.

Zudem verwaltet der Broker 3 beispielsweise eine Konfiguration 204 für die Kommunikation mit der ersten Vorrichtung 2. Die Konfiguration 204 kann dabei z.B. asymmetrische Schlüssel und Zertifikate für die sichere Kommunikation mit der ersten Vorrichtung 2 umfassen, Vorgaben zum Format der zweiten Information und/oder Versions- und Protokolleinstellungen. Die Konfiguration 204 kann in manchen Ausführungsformen weitere Informationen umfassen, z.B. ein Verfallsdatum der Konfiguration 204 oder eine erste Information, die mit der ersten Vorrichtung 2 assoziiert ist. Der Broker 3 erhält die Konfiguration 204 oder Teile der Konfiguration 204 beispielsweise von der ersten Vorrichtung 2, wo die entsprechenden Konfigurationsteile 203 gespeichert sind.

Beispielsweise anders als der Broker 3 oder die Fachanlage 4 führt die erste Vorrichtung 2 oder das erste System 2 beispielhaft auch eine Fachverwaltung 202 durch. Beispielsweise hält die erste Vorrichtung 2 nach, wie die Belegung eines oder mehrerer Fächer 7 der Fachanlage 4 ist Für diese Fächer 7 kann die erste Vorrichtung 2 beispielsweise Hashwerte bestimmen 205, die zumindest auf einer (jeweiligen) ersten Information und einer jeweiligen zweiten Information basieren. Die Hashwerte und die zugehörige erste Information oder die jeweiligen zugehörigen ersten Informationen kann die erste Vorrichtung 2 dann in eine Nachricht einfügen 206 und in Form von "gewürzten Hashwerten" an den Broker 3 übertragen. Für die jeweiligen zweiten Informationen kann die erste Vorrichtung 2 ebenfalls Nachrichten generieren 206. Diese Nachrichten 210 umfassen beispielsweise die zweite Information und eine Information, die anzeigt, an welcher Fachanlage 4 die zweite Information zum Zugang zu einem Fach 7 berechtigt. Je nachdem, wozu die jeweilige Nachricht 210 dienen soll, wird sie dann beispielsweise an unterschiedliche Vorrichtungen 201, 8 ausgegeben. Soll die zweite Information in einer Nachricht 211, 214 beispielsweise dazu genutzt werden, dass eine Lieferung in ein Fach 7 einer Fachanlage 4 z.B. von einem Lieferanten 11 eingestellt oder zurückgenommen wird, kann die Ausgabe beispielsweise an die weitere Vorrichtung 201 erfolgen. Die weitere Vorrichtung 201 kann dabei beispielsweise der Handscanner 10 eines Lieferanten 11 sein. Die weitere Vorrichtung 201 kann aber beispielsweise auch der Server einer anderen Organisation sein, die die jeweilige Einstellung oder Rücknahme organisieren soll. Soll die zweite Information in einer Nachricht 212 beispielsweise dazu genutzt werden, dass eine Lieferung aus einem Fach 7 einer Fachanlage 4 z.B. von einem Empfänger 9 entnommen wird, kann die Kommunikation 213 direkt mit der mobilen Vorrichtung 8 des Empfängers erfolgen oder durch eine Weiterleitung über die weitere Vorrichtung 201.

### Weitere Erläuterungen

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die folgenden beispielhaften Ausführungsformen sollen auch als zur Erfindung gehörig offenbart werden:
Ausführungsform 1:
   Verfahren, beispielsweise ausgeführt von einer ersten Vorrichtung, das Verfahren umfassend:
   - Bestimmen eines Hashwerts, wobei der Hashwert zumindest auf einer ersten Information und einer zweiten Information basiert, wobei der Hashwert und die zweite Information mit einem Fach einer Fachanlage assoziiert sind, wobei die zweite Information zum Zugang zu dem Fach der Fachanlage berechtigt, und wobei die erste Information mit der ersten Vorrichtung assoziiert ist,
   - Ausgeben der ersten Information an eine zweite Vorrichtung, wobei die zweite Vorrichtung nicht die Fachanlage ist,
   - Ausgeben des Hashwerts an die zweite Vorrichtung,
   - Ausgeben der zweiten Information an eine dritte Vorrichtung, sodass die zweite Information unter Verwendung der dritten Vorrichtung oder durch die dritte Vorrichtung an die Fachanlage ausgebbar oder für die Fachanlage bereitstellbar ist, wobei die dritte Vorrichtung nicht die Fachanlage ist.
Ausführungsform 2:
   Das Verfahren nach Ausführungsform 1, ferner umfassend:
   - Bestimmen einer Vielzahl von Hashwerten, die jeweils zumindest auf der ersten Information basieren.
Ausführungsform 3:
   Das Verfahren nach Ausführungsform 2, wobei das Bestimmen der Vielzahl von Hashwerten, die jeweils zumindest auf der ersten Information basieren, nur in einem vorbestimmten Zeitraum stattfindet, und wobei in einem anderen vorbestimmten Zeitraum Hashwerte bestimmt werden, die jeweils statt zumindest auf der ersten Information zumindest auf einer anderen Information basieren.
Ausführungsform 4:
   Das Verfahren nach einer der vorhergehenden Ausführungsformen, wobei das Ausgeben des Hashwerts verschlüsselt und/oder mit einer asymmetrischen Signatur erfolgt und/oder wobei das Verfahren ferner umfasst:
   - Ausgeben eines Zählers, der dem Hashwert zuordenbar ist.
Ausführungsform 5:
   Verfahren, beispielsweise ausgeführt von einer zweiten Vorrichtung, das Verfahren umfassend:
   - Erhalten einer ersten Information von einer ersten Vorrichtung, wobei die erste Information mit der ersten Vorrichtung assoziiert ist,
   - Erhalten eines Hashwerts, wobei der Hashwert zumindest auf der ersten Information und einer zweiten Information basiert, wobei der Hashwert und die zweite Information mit einem Fach einer Fachanlage assoziiert sind, und wobei die zweite Information zum Zugang zu dem Fach der Fachanlage berechtigt,
   - Ausgeben des Hashwerts und der ersten Information an die Fachanlage, sodass für die Fachanlage, basierend zumindest auf der ersten Information und dem Hashwert, feststellbar ist, ob eine zweite Information zum Zugang zu einem oder mehreren Fächern der Fachanlage berechtigt.
Ausführungsform 6:
   Das Verfahren nach Ausführungsform 5, wobei der Hashwert ein Hashwert einer Vielzahl von Hashwerten ist, die jeweils zumindest auf der ersten Information basieren.
Ausführungsform 7:
   Das Verfahren nach einer der Ausführungsformen 5-6, wobei das Erhalten des Hashwerts verschlüsselt und/oder mit einer asymmetrischen Signatur erfolgt und/oder wobei das Verfahren ferner umfasst:
   - Erhalten eines Zählers, der dem Hashwert zuordenbar ist.
Ausführungsform 8:
   Verfahren, beispielsweise ausgeführt von einer Fachanlage, das Verfahren umfassend:
   - Erhalten eines Hashwerts und einer ersten Information von einer zweiten Vorrichtung, wobei der Hashwert mit einem Fach der Fachanlage assoziiert ist, und wobei die erste Information mit einer ersten Vorrichtung assoziiert ist,
   - Erhalten oder Erfassen einer zweiten Information,
   - Feststellen, basierend zumindest auf der ersten Information und dem Hashwert, ob die zweite Information zum Zugang zu einem oder mehreren Fächern der Fachanlage berechtigt.
Ausführungsform 9:
   Das Verfahren nach Ausführungsform 8, ferner umfassend:
   - Erhalten einer Vielzahl von Hashwerten, die jeweils mit einem Fach der Fachanlage assoziiert sind.
Ausführungsform 10:
   Das Verfahren nach Ausführungsform 9, wobei die Vielzahl von Hashwerten einen oder mehrere Hashwerte umfasst, die jeweils zumindest auf der ersten Information basieren.
Ausführungsform 11:
   Das Verfahren nach einer der Ausführungsformen 8-10, wobei das Feststellen, ob die zweite Information zum Zugang zu einem oder mehreren Fächern der Fachanlage berechtigt, umfasst:
   - Bestimmen eines Prüfhashwerts, wobei der Prüfhashwert zumindest auf der ersten Information und der zweiten Information basiert.
Ausführungsform 12:
   Das Verfahren nach Ausführungsform 11, wobei das Feststellen, ob die zweite Information zum Zugang zu einem oder mehreren Fächern der Fachanlage berechtigt, ferner umfasst:
   - Vergleichen des Prüfhashwerts mit einem oder mehreren Hashwerten einer Vielzahl von Hashwerten, die jeweils mit einem Fach der Fachanlage assoziiert sind.
Ausführungsform 13: Das Verfahren nach Ausführungsform 12, wobei beim Feststellen, ob die zweite Information zum Zugang zu einem oder mehreren Fächern der Fachanlage berechtigt, durch das Vergleichen des Prüfhashwerts mit einem oder mehreren Hashwerten der Vielzahl von Hashwerten oder unter Verwendung des Vergleichens des Prüfhashwerts mit einem oder mehreren Hashwerten der Vielzahl von Hashwerten festgestellt wird, zu welchem Fach der Fachanlage oder zu welchen Fächern der Fachanlage die zweite Information zum Zugang berechtigt.
Ausführungsform 14:
   Das Verfahren nach einer der Ausführungsformen 11-13, wobei der Prüfhashwert ein Ausgabewert eines Hashalgorithmus ist, wobei zumindest die erste Information und die zweite Information Eingabewerte des Hashalgorithmus sind.
Ausführungsform 15:
   Das Verfähren nach einer der Ausführungsformen 8-14, ferner umfassend:
   - wenn, basierend zumindest auf der ersten Information und dem Hashwert, festgestellt wurde, dass die zweite Information zum Zugang zu einem oder mehreren Fächern der Fachanlage berechtigt, Speichern der zweiten Information.
Ausführungsform 16:
   Das Verfahren nach einer der vorhergehenden Ausführungsformen, wobei der Hashwert ein Ausgabewert eines Hashalgorithmus ist, wobei zumindest die erste Information und die zweite Information Eingabewerte des Hashalgorithmus sind.
Ausführungsform 17:
   Das Verfahren nach einer der vorhergehenden Ausführungsformen, wobei die erste Information eine Zusatzinformation für einen Hashalgorithmus ist, die dazu bestimmt ist, die Sicherheit des Hashalgorithmus zu erhöhen, beispielsweise ein Salz.
Ausführungsform 18:
   Verfahren, beispielsweise ausgeführt von einer Fachanlage, das Verfahren umfassend:
   - Erhalten oder Erfassen einer Information,
   - Feststellen, basierend auf der Information, ob auf eine erste Art oder auf eine zweite Art festgestellt werden soll, ob eine zweite Information zum Zugang zu einem oder mehreren Fächern der Fachanlage berechtigt,
   - wenn festgestellt wurde, dass auf die erste Art festgestellt werden soll, ob die zweite Information zum Zugang zu einem oder mehreren Fächern der Fachanlage berechtigt, Ausführen eines ersten Verfahrens, wobei das erste Verfahren das Verfahren nach einer der Ausführungsformen 8 oder 9-17, soweit abhängig von Ausführungsform 8, ist,
   - wenn festgestellt wurde, dass auf die zweite Art festgestellt werden soll, ob die zweite Information zum Zugang zu einem oder mehreren Fächern der Fachanlage berechtigt, Ausführen eines zweiten Verfahrens zum Feststellen, ob die zweite Information zum Zugang zu einem oder mehreren Fächern der Fachanlage berechtigt.
Ausführungsform 19:
   Das Verfahren nach Ausführungsform 18, wobei das zweite Verfahren zum Feststellen, ob die zweite Information zum Zugang zu einem oder mehreren Fächern der Fachanlage berechtigt, wissensbasiert und/oder besitzbasiert und/oder biometriebasiert ist.
Ausführungsform 20:
   Das Verfahren nach einer der Ausführungsformen 18-19, wobei das zweite Verfahren zum Feststellen, ob die zweite Information zum Zugang zu einem oder mehreren Fächern der Fachanlage berechtigt, unter Verwendung von Daten erfolgt, die einer Person oder einem Gerät zuordenbar sind.
Ausführungsform 21:
   Verfahren, beispielsweise ausgeführt von einer mobilen Vorrichtung, das Verfahren umfassend:
   - Erhalten oder Erfassen einer zweiten Information von einer ersten Vorrichtung, wobei die zweite Information mit einem Fach einer Fachanlage assoziiert ist, wobei die zweite Information zum Zugang zu dem Fach der Fachanlage berechtigt, und wobei die erste Vorrichtung nicht die Fachanlage ist,
   - Übermitteln der zweiten Information an die Fachanlage oder Bereitstellen der zweiten Information für die Fachanlage, sodass für die Fachanlage, basierend zumindest auf einer ersten Information und einem Hashwert, feststellbar ist, ob die zweite Information zum Zugang zu einem oder mehreren Fächern der Fachanlage berechtigt, wobei die erste Information mit der ersten Vorrichtung assoziiert ist.
Ausführungsform 22: .
   Das Verfahren nach einer der vorhergehenden Ausführungsformen, wobei die erste Vorrichtung nicht dazu eingerichtet ist, der Fachanlage den Hashwert zu übermitteln.
Ausführungsform 23:
   Das Verfahren nach einer der vorhergehenden Ausführungsformen, wobei die zweite Vorrichtung dazu eingerichtet ist, der Fachanlage den Hashwert zu übermitteln oder bereitzustellen und/oder wobei die zweite Vorrichtung dazu eingerichtet ist, mit einer Vielzahl von Fachanlagen zu kommunizieren.
Ausführungsform 24:
   Das Verfahren nach einer der vorhergehenden Ausführungsformen, wobei die zweite Information zufällig bestimmt wird, beispielsweise von der ersten Vorrichtung.
Ausführungsform 25:
   Das Verfahren nach einer der vorhergehenden Ausführungsformen, wobei die zweite Information nur in einem vorbestimmten Zeitraum zum Zugang zu dem Fach der Fachanlage, mit dem sie assoziiert ist, berechtigt.
Ausführungsform 26:
   Vorrichtung oder System aus drei, vier oder mehr Vorrichtungen, eingerichtet zur Ausführung und/oder Steuerung des Verfahrens nach einer der vorhergehenden Ausführungsformen oder umfassend jeweilige Mittel zur Ausführung und/oder Steuerung der Schritte des Verfahrens nach einer der vorhergehenden Ausführungsformen.
Ausführungsform 27:
   Computerprogramm, umfassend Programmanweisungen, die einen Prozessor zur Ausführung und/oder Steuerung des Verfahrens gemäß einer der Ausführungsformen 1-25 veranlassen, wenn das Computerprogramm auf dem Prozessor läuft.

## Patentansprüche

1. Verfahren, beispielsweise ausgeführt von einer ersten Vorrichtung, das Verfahren umfassend:
- Bestimmen eines Hashwerts, wobei der Hashwert zumindest auf einer ersten Information und einer zweiten Information basiert, wobei der Hashwert und die zweite Information mit einem Fach einer Fachanlage assoziiert sind, wobei die zweite Information zum Zugang zu dem Fach der Fachanlage berechtigt, und wobei die erste Information mit der ersten Vorrichtung assoziiert ist,
- Ausgeben der ersten Information an eine zweite Vorrichtung, wobei die zweite Vorrichtung nicht die Fachanlage ist,
- Ausgeben des Hashwerts an die zweite Vorrichtung,
- Ausgeben der zweiten Information an eine dritte Vorrichtung, sodass die zweite Information unter Verwendung der dritten Vorrichtung oder durch die dritte Vorrichtung an die Fachanlage ausgebbar oder für die Fachanlage bereitstellbar ist, wobei die dritte Vorrichtung nicht die Fachanlage ist.

2. Das Verfahren nach Anspruch 1, ferner umfassend:
- Bestimmen einer Vielzahl von Hashwerten, die jeweils zumindest auf der ersten Information basieren.

3. Das Verfahren nach Anspruch 2, wobei das Bestimmen der Vielzahl von Hashwerten, die jeweils zumindest auf der ersten Information basieren, nur in einem vorbestimmten Zeitraum stattfindet, und wobei in einem anderen vorbestimmten Zeitraum Hashwerte bestimmt werden, die jeweils statt zumindest auf der ersten Information zumindest auf einer anderen Information basieren.

4. Das Verfahren nach einem der vorhergehenden Ansprüche, wobei das Ausgeben des Hashwerts verschlüsselt und/oder mit einer asymmetrischen Signatur erfolgt und/oder wobei das Verfahren ferner umfasst:
- Ausgeben eines Zählers, der dem Hashwert zuordenbar ist.

5. Verfahren, beispielsweise ausgeführt von einer zweiten Vorrichtung, das Verfahren umfassend:
- Erhalten einer ersten Information von einer ersten Vorrichtung, wobei die erste Information mit der ersten Vorrichtung assoziiert ist,
- Erhalten eines Hashwerts, wobei der Hashwert zumindest auf der ersten Information und einer zweiten Information basiert, wobei der Hashwert und die zweite Information mit einem Fach einer Fachanlage assoziiert sind, und wobei die zweite Information zum Zugang zu dem Fach der Fachanlage berechtigt,
- Ausgeben des Hashwerts und der ersten Information an die Fachanlage, sodass für die Fachanlage, basierend zumindest auf der ersten Information und dem Hashwert, feststellbar ist, ob eine zweite Information zum Zugang zu einem oder mehreren Fächern der Fachanlage berechtigt.

6. Das Verfahren nach Anspruch 5, wobei der Hashwert ein Hashwert einer Vielzahl von Hashwerten ist, die jeweils zumindest auf der ersten Information basieren.

7. Verfahren, beispielsweise ausgeführt von einer Fachanlage, das Verfahren umfassend:
- Erhalten eines Hashwerts und einer ersten Information von einer zweiten Vorrichtung, wobei der Hashwert mit einem Fach der Fachanlage assoziiert ist, und wobei die erste Information mit einer ersten Vorrichtung assoziiert ist,
- Erhalten oder Erfassen einer zweiten Information,
- Feststellen, basierend zumindest auf der ersten Information und dem Hashwert, ob die zweite Information zum Zugang zu einem oder mehreren Fächern der Fachanlage berechtigt.

8. Das Verfahren nach Anspruch 7, ferner umfassend:
- Erhalten einer Vielzahl von Hashwerten, die jeweils mit einem Fach der Fachanlage assoziiert sind.

9. Das Verfahren nach Anspruch 8, wobei die Vielzahl von Hashwerten einen oder mehrere Hashwerte umfasst, die jeweils zumindest auf der ersten Information basieren.

10. Das Verfahren nach einem der Ansprüche 7-9, wobei das Feststellen, ob die zweite Information zum Zugang zu einem oder mehreren Fächern der Fachanlage berechtigt, umfasst:
- Bestimmen eines Prüfhashwerts, wobei der Prüfhashwert zumindest auf der ersten Information und der zweiten Information basiert, und
- Vergleichen des Prüfhashwerts mit einem oder mehreren Hashwerten einer Vielzahl von Hashwerten, die jeweils mit einem Fach der Fachanlage assoziiert sind, und
wobei beim Feststellen, ob die zweite Information zum Zugang zu einem oder mehreren Fächern der Fachanlage berechtigt, durch das Vergleichen des Prüfhashwerts mit einem oder mehreren Hashwerten der Vielzahl von Hashwerten oder unter Verwendung des Vergleichens des Prüfhashwerts mit einem oder mehreren Hashwerten der Vielzahl von Hashwerten festgestellt wird, zu welchem Fach der Fachanlage oder zu welchen Fächern der Fachanlage die zweite Information zum Zugang berechtigt.

11. Das Verfahren nach Anspruch 10, wobei der Prüfhashwert ein Ausgabewert eines Hashalgorithmus ist, wobei zumindest die erste Information und die zweite Information Eingabewerte des Hashalgorithmus sind.

12. Das Verfahren nach einem der vorhergehenden Ansprüche, wobei der Hashwert ein Ausgabewert eines Hashalgorithmus ist, wobei zumindest die erste Information und die zweite Information Eingabewerte des Hashalgorithmus sind.

13. Das Verfahren nach einem der vorhergehenden Ansprüche, wobei die erste Information eine Zusatzinformation für einen Hashalgorithmus ist, die dazu bestimmt ist, die Sicherheit des Hashalgorithmus zu erhöhen, beispielsweise ein Salz.

14. Verfahren, beispielsweise ausgeführt von einer Fachanlage, das Verfahren umfassend:
- Erhalten oder Erfassen einer Information,
- Feststellen, basierend auf der Information, ob auf eine erste Art oder auf eine zweite Art festgestellt werden soll, ob eine zweite Information zum Zugang zu einem oder mehreren Fächern der Fachanlage berechtigt,
- wenn festgestellt wurde, dass auf die erste Art festgestellt werden soll, ob die zweite Information zum Zugang zu einem oder mehreren Fächern der Fachanlage berechtigt, Ausführen eines ersten Verfahrens, wobei das erste Verfahren das Verfahren nach einem der Ansprüche 7 oder 8-13, soweit abhängig von Anspruch 7, ist,
- wenn festgestellt wurde, dass auf die zweite Art festgestellt werden soll, ob die zweite Information zum Zugang zu einem oder mehreren Fächern der Fachanlage berechtigt, Ausführen eines zweiten Verfahrens zum Feststellen, ob die zweite Information zum Zugang zu einem oder mehreren Fächern der Fachanlage berechtigt.

15. Verfahren, beispielsweise ausgeführt von einer mobilen Vorrichtung, das Verfahren umfassend:
- Erhalten oder Erfassen einer, zweiten Information von einer ersten Vorrichtung, wobei die zweite Information mit einem Fach einer Fachanlage assoziiert ist, wobei die zweite Information zum Zugang zu dem Fach der Fachanlage berechtigt, und wobei die erste Vorrichtung nicht die Fachanlage ist,
- Übermitteln der zweiten Information an die Fachanlage oder Bereitstellen der zweiten Information für die Fachanlage, sodass für die Fachanlage, basierend zumindest auf einer ersten Information und einem Hashwert, feststellbar ist, ob die zweite Information zum Zugang zu einem oder mehreren Fächern der Fachanlage berechtigt, wobei die erste Information mit der ersten Vorrichtung assoziiert ist.
